# EUROPEAN PATENT APPLICATION

(11) **EP 4 817 924 A1**
(43) Date of publication of application: **07.10.2026**
(21) Application number: 24945692.2
(22) Date of filing: 18.06.2024
(51) Int. Cl.: B60K 35/23, G02B 27/01

(54) **IMAGING DEVICE FOR VEHICLE HAVING REDUCED VOLUME**

(71) Applicant: LG Electronics Inc., Yeongdeungpo-gu Seoul 07336 (KR)
(72) Inventor: RYU, Juhyeok, Seoul 06772 (KR); KIM, Doohee, Seoul 06772 (KR); KIM, Dongwook, Seoul 06772 (KR); LEE, Kyoungil, Seoul 06772 (KR); KWON, Yunyoung, Seoul 06772 (KR)
(74) Representative: Vossius & Partner Patentanwälte Rechtsanwälte mbB
(86) International application number: PCT/KR2024/008385
(87) International publication number: WO 2025/263647

(57) **Abstract**

An imaging device for a vehicle comprises: a first cover which is formed on the front surface of a dashboard of the vehicle; a second cover which is arranged, spaced apart from the first cover, in an inner area inward of the front surface; a picture generation unit (PGU) which is arranged inside the dashboard and generates a first optical signal and a second optical signal to one side of the dashboard; a first mirror disposed on the second cover and one side of the dashboard and configured to reflect the first optical signal and the second optical signal from the one side; and a second mirror configured to transmit the first optical signal that has passed through the first mirror disposed on the second cover and the second optical signal reflected from the first mirror disposed on the second cover.

## Description

### Technical Field

The present disclosure relates to a vehicle image device. More particularly, the present disclosure relates to a vehicular image device having a reduced volume and a vehicle equipped with the vehicular image device.

### Background Art

A vehicle is an apparatus configured to move in a desired direction under the control of a user. A typical example of a vehicle is an automobile.

In recent years, there has been a trend toward the vehicle being equipped with various sensors, electronic devices, and the like to ensure the convenience of the user who uses the vehicle. In particular, research on the Advanced Driver Assistance System (ADAS) has been actively conducted to enhance the user convenience in vehicle operation. Furthermore, the development of autonomous vehicles has been actively conducted.

A vehicular display that displays various types of driving-related information is positioned below a driver's forward line of sight, thereby inducing rubbernecking and adversely affecting driving safety. Accordingly, in recent years, vehicles have been equipped with the vehicular image device, such as the head-up display (HUD), that enables an image of the surroundings in front of the vehicle to be projected onto the windshield in proximity to the driver's forward line of sight, thereby ensuring driving safety.

To display driving-related information, the head-up display (HUD) may be configured to provide a large-sized display region through the use of augmented reality (AR). A limited mounting space of a large-sized AR-HUD may require a product that has a reduced volume (10 L or less) and provides a large display region (FOV: 10 × 4 degrees or more). However, there is a problem in that it is difficult to configure a vehicular image device, such as an AR-HUD, that has a reduced volume of 10L or less and provides a large screen region (FOV of 10 × 4 degrees or more).

### Disclosure of Invention

### Technical Problem

An object of the present disclosure is to provide a vehicular image device that has a reduced volume, and a vehicle equipped with the vehicular image device.

Another object of the present disclosure is to provide a vehicular image device that has a reduced volume within a limited mounting space of a large-screen AR-HUD, thereby ensuring a field of view (FOV) having a predetermined angle or greater.

A further object of the present disclosure is to provide a vehicular image device that reflects different AR images toward a windshield and other regions using a plurality of mirrors and provides the AR images within a user's field of view.

Another object of the present disclosure is to provide a vehicular image device that has an arrangement structure that varies according to vehicle specifications, thereby optimizing occupied space in terms of length or volume.

Still another object of the present disclosure is to generate continuous images having a large aspect ratio by using a single image module, the continuous images being associated with driving-related information.

The present disclosure is not limited to the above-mentioned objects. From the following description, other objects not mentioned above will be apparent to a person of ordinary skill in the art.

### Solution to Problem

To accomplish the above-mentioned objects, according to one aspect of the present disclosure, there is provided a vehicular image device including: a first cover formed on a front surface of a dashboard of a vehicle; a second cover arranged more inward than the front surface in a manner spaced apart from the first cover; a picture generation unit (PGU) arranged inside the dashboard and forming a first optical signal and a second optical signal toward one lateral surface of the dashboard; a first mirror arranged on the one lateral surface of the dashboard and the second cover and configured to reflect the first optical signal and the second optical signal from the one lateral surface; and a second mirror configured to transmit the first optical signal transmitted through the first mirror arranged on the second cover and the second optical signal reflected by the first mirror arranged on the second cover.

According to an embodiment, the vehicular image device may further include: a third mirror configured to have a first length in such a manner as to reflect the first optical signal having first polarization, the first optical signal being emitted from a first region of the PGU; and a fourth mirror overlapping the third mirror and configured to have a second length different from the first length in such a manner as to reflect the second optical signal having a second polarization component, the second optical signal being emitted from a second region of the PGU.

According to an embodiment, in the vehicular image device, the third mirror may be formed to have the first length less than the second length of the fourth mirror, and the third mirror may be arranged at a higher position than the fourth mirror along a vertical axis.

According to an embodiment, in the vehicular image device, the first optical signal having the first polarization, the first optical signal being emitted from the first region, may be reflected by the third mirror, transmitted through the fourth mirror, and reflected by the first mirror, and the second optical signal having the second polarization, the second optical signal being emitted from the second region, may be reflected by the first mirror after being reflected by the fourth mirror.

According to an embodiment, in the vehicular image device, the PGU may be configured as a display plane. The vehicular image device may further include a vertical structure formed at a first height on the display plane in such a manner as to prevent interference between the first optical signal emitted from the first region and the second optical signal emitted from the second region.

According to an embodiment, the vehicular image device may further include a polarization plate spaced at a second height from the display plane in the first region and configured to introduce a phase delay of λ/2 to the first optical signal having the second polarization. The polarization plate may convert the first optical signal having the second polarization into the first optical signal having the first polarization.

According to an embodiment, in the vehicular image device, the first mirror may include: a first portion arranged on the one lateral surface; and a second portion connected to the first portion and arranged on the second cover. The second portion may transmit the first optical signal reflected by the first portion, may transmit the second optical signal reflected by the first portion, and may reflect the second optical signal reflected by the second mirror.

According to an embodiment, in the vehicular image device, the first optical signal transmitted through a first point on the second mirror may be displayed as a first AR image in a first region of a windshield of the vehicle, and, after being initially reflected by the second portion of the first mirror and the second mirror, the second optical signal transmitted through a second point on the second mirror may be displayed as a second AR image in a second region of the windshield of the vehicle. The second mirror may be arranged in such a manner that the second point thereon is positioned more inward in a manner adjacent to a user, than the first point. The first region and the second region of the windshield may correspond to a lower portion and an upper portion, respectively, of the windshield.

According to an embodiment, in the vehicular image device, the second cover may include: a first mirror; and a polarization plate arranged on a rear surface of the first mirror and configured to convert polarization of the first optical signal and polarization of the second optical signal.

According to an embodiment, in the vehicular image device, the first cover may include: the second mirror; a polarization plate arranged on a first surface of the second mirror and configured to convert the polarization of the first optical signal and the polarization of the second optical signal, and a polarization film unit arranged on a second surface of the second mirror and configured to convert respective second polarization components of the first optical signal and the second optical signal.

According to an embodiment, in the vehicular image device, the PGU may include a first PGU arranged in a first region of the PGU and configured to emit the first optical signal having a first polarization component; a second PGU arranged in a second region of the PGU and configured to emit the second optical signal having a second polarization component; and a third PGU arranged in a third region adjacent to the second region of the PGU and configured to emit a third optical signal having the second polarization component.

According to an embodiment, in the vehicular image device, wherein the PGU may include: a first PGU arranged in a first region of the PGU and configured to emit the first optical signal having a first polarization component; a second PGU arranged in a second region of the PGU and configured to emit the second optical signal having a second polarization component; and a third PGU arranged in a third region between the first region and the second region of the PGU and configured to emit a third optical signal having the first polarization component.

According to an embodiment, in the vehicular image device, the PGU may be configured as a display plane. The vehicular image device may further include: a first vertical structure formed at a first height at a first point on the display plane in such a manner as to prevent interference between the first optical signal emitted from the first region and the second optical signal emitted from the second region; and a second vertical structure formed at a second height at a second point on the display plane in such a manner as to prevent interference between the second optical signal emitted from the second region and the third optical signal emitted from the third region.

According to an embodiment, the vehicular image device may further include a polarization plate spaced at a third height from the display plane in the first region and configured to introduce a phase delay of λ/2 to the first optical signal. The polarization plate may convert the first optical signal having the second polarization into the first optical signal having the first polarization.

According to an embodiment, in the vehicular image device, the first optical signal having the first polarization component, the first optical signal being emitted from the first region, may be transmitted through the fourth mirror, reflected by the third mirror, transmitted through the fourth mirror, reflected by a first portion of the first mirror, and transmitted through a second portion of the first mirror and the second mirror. The second optical signal having the second polarization component, the second optical signal being emitted from the second region, may be reflected by the fourth mirror and the first portion of the first mirror, transmitted through the second portion of the first mirror, reflected by the second mirror and the second portion of the first mirror, and transmitted through the second mirror. The third optical signal having the second polarization component, the third optical signal being emitted from the third region, may be reflected by the fourth mirror and the first portion of the first mirror, transmitted through the second portion of the first mirror, reflected by the second mirror and the second portion of the first mirror, and transmitted through the second mirror.

According to an embodiment, in the vehicular image device, the first optical signal transmitted through the second portion of the first mirror and a first point on the second mirror may be displayed as a first AR image in a first region of a windshield of the vehicle, after being initially reflected by the second mirror, the second optical signal transmitted through a second point on the second mirror may be displayed as a second AR image in a second region of the windshield, and, after being initially reflected by the second mirror, the third optical signal transmitted through a third point on the second mirror may be displayed as a third AR image in a third region of the windshield, The second mirror may be arranged in such a manner that the third point thereon is most adjacent to a user within the vehicle. The first region, the second region, and the third region of the windshield may correspond to a lower portion, a central portion, and an upper portion, respectively, of the windshield.

According to an embodiment, in the vehicular image device, the PGU may be configured as a display plane. The vehicular mage device may further include: a first vertical structure formed at a first height at a first point on the display plane in such a manner as to prevent intervention between the first optical signal emitted from the first region and the third optical signal emitted from the third region; and a second vertical structure formed at a second height at a second point on the display plane in such a manner as to prevent intervention between the third optical signal emitted from the third region and the second optical signal emitted from the second region.

According to an embodiment, the vehicular image device may further include: a first polarization plate spaced at a third height from the display plane in the first region and configured to introduce a phase delay of λ/2 to polarization of the first optical signal; and a second polarization plate spaced at a fourth height from the display plane in the third region and configured to introduce a phase delay of λ/2 to polarization of the third optical signal. The first polarization plate may convert the first optical signal having the second polarization into the first optical signal having the first polarization, and the second polarization plate may convert the third optical signal having the second polarization into the third optical signal having the first polarization.

According to an embodiment, in the vehicular image device, the first optical signal having the first polarization component, the first optical signal being emitted from the first region, may be transmitted through the fourth mirror, reflected by the third mirror, transmitted through the fourth mirror, reflected by a first portion of the first mirror, and transmitted through a second portion of the first mirror and the second mirror. The third optical signal, having the first polarization component, the third optical signal being emitted from the third region, may be transmitted through the fourth mirror, reflected by the third mirror, transmitted through the fourth mirror, reflected by a first portion of the first mirror, and transmitted through a second portion of the first mirror and the second mirror. The second optical signal, having the second polarization component, the second optical signal being emitted from the second region, may be reflected by the third mirror and the first portion of the first mirror, transmitted through the second portion of the first mirror, reflected by the second mirror and the second portion of the first mirror, and transmitted through the second mirror.

According to an embodiment, in the vehicular image device, the first optical signal transmitted through a first point on the second mirror may be displayed as a first AR image in a first region of a windshield of the vehicle, the third optical signal transmitted through the second portion of the first mirror and a second point on the second mirror may be displayed as a second AR image in a second region of the windshield, and the second optical signal transmitted through a third point on the second mirror may be displayed as a third AR image in a third region of the windshield. The second mirror may be arranged in such a manner that the third point thereon is most adjacent to a user within the vehicle. The first region, the second region, and the third region of the windshield may correspond to a lower portion, a central portion, and an upper portion, respectively, of the windshield.

Details of other embodiments are set forth in the following detailed description and the accompanying drawings.

### Advantageous Effects of Invention

Technical features of a vehicular image device, according to the present disclosure, having a reduced volume, and technical features of a vehicle equipped with the vehicular image device are summarized as follows.

According to the present disclosure, the vehicular image device includes a plurality of covers configured to reflect or transmit optical signals. As a result, the vehicular image device can have a reduced volume within a limited mounting space of a large-screen AR-HUD, thereby ensuring a field of view (FOV) having a predetermined angle or greater.

According to the present disclosure, a polarization film is attached to at least one surface of the cover. As a result, the vehicular image device can have a reduced volume within a limited mounting space of a large-screen AR-HUD, thereby ensuring a field of view (FOV) having a predetermined angle or greater.

According to the present specification, different AR images are reflected through different regions of a windshield using a plurality of mirrors. As a result, the vehicular image device can provide the AR images within a field of view (FOV) of a user.

According to the present disclosure, the vehicular image device can have an arrangement structure that varies according to vehicle specifications, thereby optimizing occupied space in terms of length or volume.

According to the present disclosure, when a length constraint is limited, the vehicular image device can have a height-reduced structure by directly propagating optical signals from a PGU toward a windshield through a mirror arranged on one lateral surface of a dashboard and through mirrors arranged on covers.

According to the present disclosure, when a length constraint is significant, the vehicular image device can have a length-reduced structure by reflecting optical signals from a PGU through mirrors arranged on one lateral surface and propagating the optical signals toward a windshield through mirrors arranged on the other lateral surface and covers.

According to the present disclosure, in the vehicular image device, a plurality of covers arranged on a front surface of a dashboard and within the dashboard to prevent the introduction of foreign material are used to establish an optical system for multiple selective reflection/transmission, thereby enabling maximized volume reduction.

According to the present disclosure, the vehicular image device can achieve a volume reduction of 40% or more compared to a large-screen AR-HUD available on the market.

According to the present disclosure, the vehicular image device can be configured as an AR-HUD having a volume of approximately 9 L when installed in a vehicle.

The present disclosure is not limited to the above-mentioned effects. From the following detailed description, other effects not mentioned above will be apparent to a person of ordinary skill in the art.

### Brief Description of Drawings

FIG. 1 is a view illustrating the exterior of a vehicle according to an embodiment of the present disclosure.
FIG. 2 is a view illustrating the vehicle according to the embodiment of the present disclosure when viewed at various exterior angles.
FIGS. 3 to 4 are views each illustrating the interior of the vehicle according to the embodiment of the present disclosure.
FIG. 5 is a block diagram that is referenced to describe the vehicle according to the embodiment of the present disclosure.
FIG. 6A is a view illustrating a configuration in which a screen with a predetermined ratio is formed in a specific region of a front glass of a vehicle.
FIG. 6B is a view illustrating a structure in which the vehicle video device for generating the screen with the predetermined ratio in the screen in FIG. 6A is arranged inside a dashboard of the vehicle.
FIG. 7 is a view illustrating the structure of the vehicular image device having a first mirror and a second mirror.
FIG. 8 is a view illustrating the structure of the vehicular image device that includes the first mirror, the second mirror, a third mirror, and a fourth mirror.
FIG. 9 is a view illustrating regions in which, in the vehicular image device in FIG. 8, a P-polarized first optical signal and an S-polarized second optical signal propagate after being reflected by the mirrors.
FIG. 10 is a view illustrating a polarization state of a signal incident upon, transmitted through, and reflected by each structure of the vehicular image device in FIG. 8.
FIGS. 11 to 13 are views illustrating the vehicular image devices that include different stacking structures of the first and second mirrors according to embodiments.
FIG. 14 is a view illustrating the structure of the vehicular image device capable of displaying three AR images.
FIG. 15 is a view illustrating a polarization state of a signal incident upon, transmitted through, and reflected by each structure of the vehicular image device in FIG. 14.
FIG. 16 is a view illustrating propagation paths for P-polarized, S-polarized, and S-polarized optical signals associated with respective regions of a PGU of the vehicular image device in FIG. 7.
FIG. 17 is a view illustrating propagation paths for P-polarized, S-polarized, and S-polarized optical signals associated with respective regions of a PGU of the vehicular image device in FIGS. 8 and 14.
FIG. 18 is a view illustrating propagation paths for P-polarized, P-polarized, and S-polarized optical signals associated with respective regions of a PGU of the vehicular image device in FIG. 7.
FIG. 19 is a view illustrating propagation paths for P-polarized, P-polarized, and S-polarized optical signals associated with respective regions of a PGU of the vehicular image device in FIGS. 8 and 14.

### Mode for the Invention

For the purpose of disclosure, embodiments of the present disclosure will be described in detail below with reference to the accompanying drawings. The same or similar constituent elements are given the same reference numeral, and descriptions thereof are not repeated. The terms "module" and "unit" are hereinafter used interchangeably to name constituent elements solely for the convenience of description in the present specification. These terms are not intended to have different meanings or to indicate different functions. In addition, in describing the embodiments disclosed in the present specification, detailed descriptions of well-known related technologies may be omitted when such descriptions are deemed to obscure the nature and gist of the present disclosure. In addition, the accompanying drawings are merely provided to facilitate understanding of the embodiments disclosed in the present specification and shall not be construed as limiting the technical idea disclosed in the present specification. Furthermore, any modifications, equivalents, or substitutions of constituent elements, to the extent falling within the technical scope of the present disclosure, are intended to be encompassed within the scope of the present disclosure.

The ordinal terms 'first,' 'second,' and so on are used to describe various constituent elements and are not intended to imply any limitation on meaning or function. These terms are used merely to distinguish among constituent elements having similar functions.

It should be understood that, when a constituent element is described as being 'connected to' or 'having access to' another constituent element, such connection or access may be direct or may occur through one or more intermediary constituent elements. Likewise, it should be understood that, when a constituent element is described as being "connected to" or "having access to" another constituent element, such connection or access may be direct without the need for one or more intermediary constituent elements.

Unless expressly stated otherwise or required by context, a noun used in the singular form includes the plural form.

The terms 'include,' 'have,' or equivalents thereof, as used in the present disclosure, are intended to indicate the presence of described stated features, numbers, steps, operations, constituent elements, components, or combinations thereof, without precluding the presence or addition of one or more other features, numbers, steps, operations, constituent elements, components, or combinations thereof.

As used in the present specification, the term 'vehicle' may conceptually include an automobile or a two-wheeled vehicle. The vehicle will be described below, with particular emphasis on the automobile.

As used in the present specification, the term 'vehicle' may conceptually include a combustion engine vehicle having an engine as a power source, a hybrid vehicle having an engine and an electric motor as power sources, and an electric vehicle with an electric motor as a power source.

In the following description, the left side of the vehicle refers to the left side with respect to the traveling direction of the vehicle, and the right side of the vehicle refers to the right side with respect to the traveling direction of the vehicle.

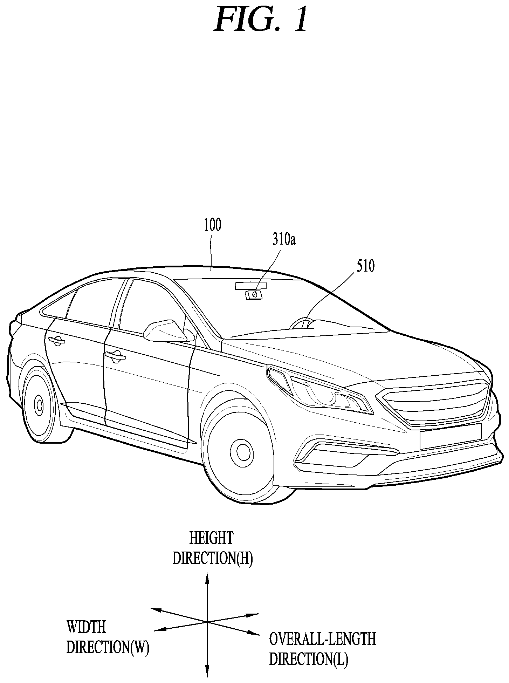

FIG. 1 is a view illustrating the exterior of the vehicle according to an embodiment of the present disclosure.

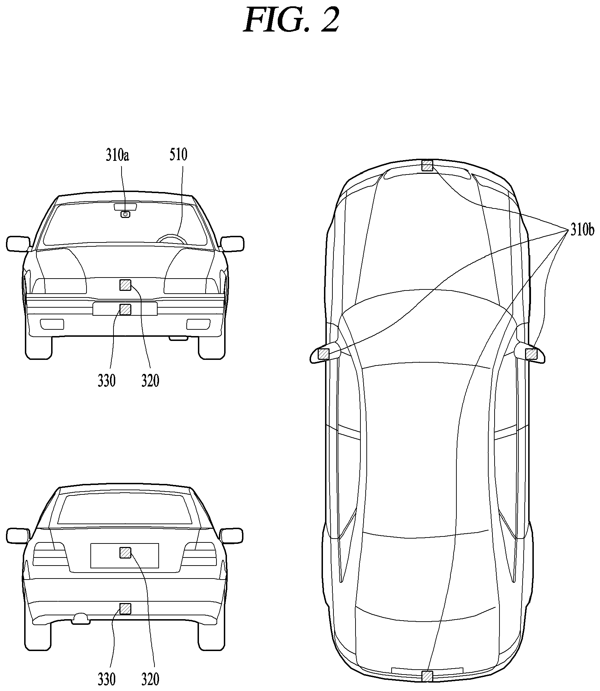

FIG. 2 is a view illustrating the vehicle according to the embodiment of the present disclosure when viewed at various exterior angles.

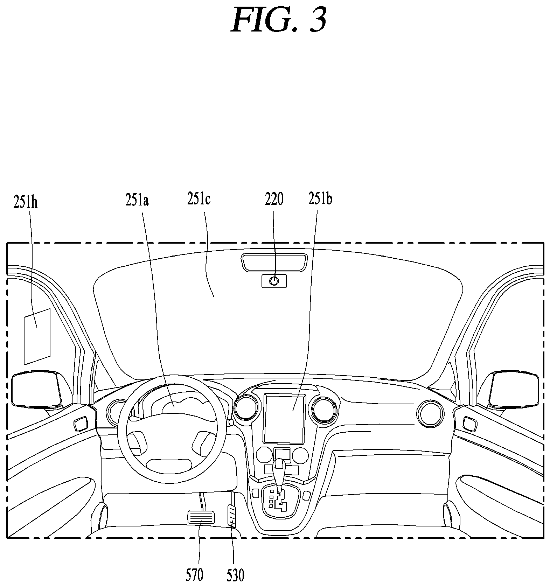

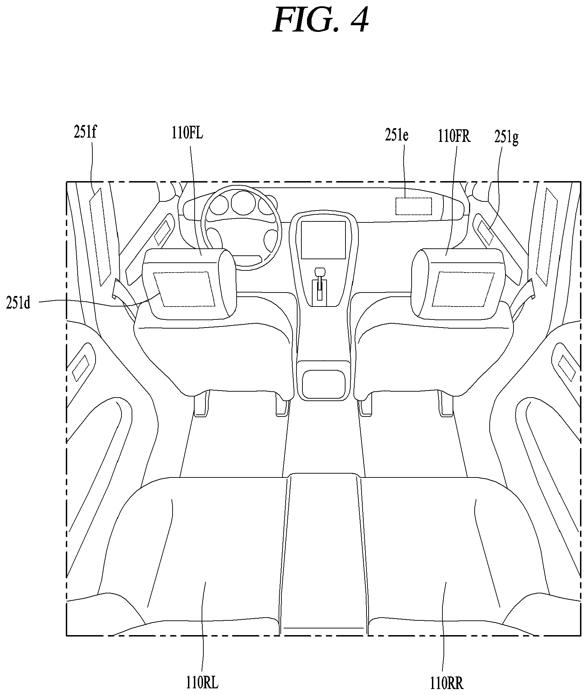

FIGS. 3 to 4 are views each illustrating the interior of the vehicle according to the embodiment of the present disclosure.

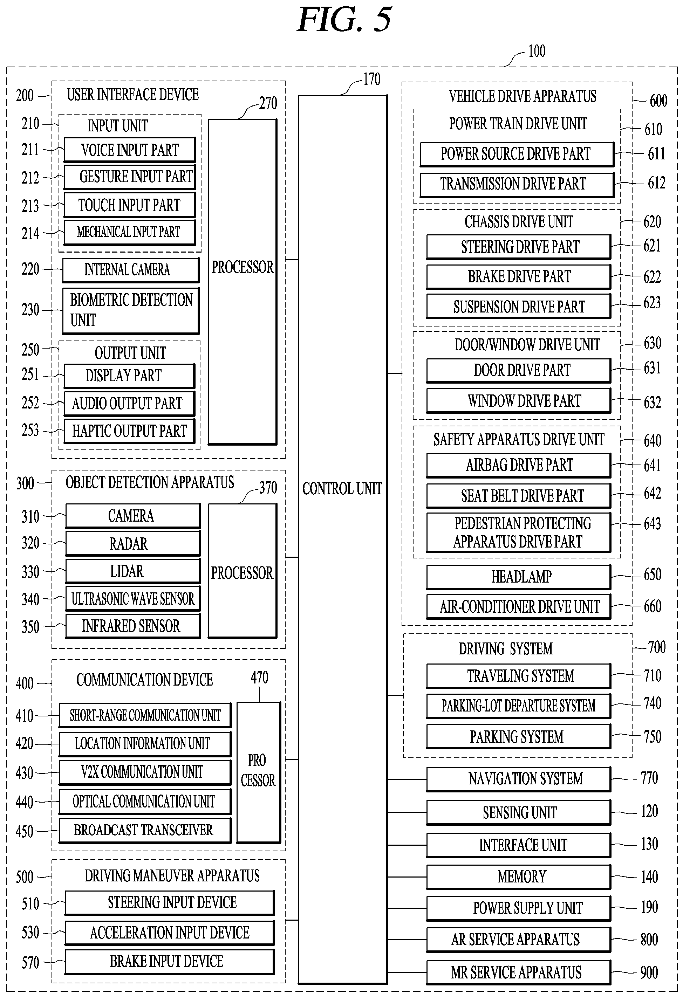

FIG. 5 is a block diagram that is referenced to describe the vehicle according to the embodiment of the present disclosure.

With reference to FIGS. 1 to 5, a vehicle 100 may include a wheel rotated by a power source, and a steering input device 510 for adjusting the traveling direction of the vehicle 100.

The vehicle 100 may be an autonomous vehicle.

The vehicle 100 may switch to an autonomous driving mode or a manual mode in response to input from the user.

For example, the vehicle 100 may switch from the manual mode to the autonomous mode or from the autonomous mode to the manual mode on the basis of the user input that is received through a user interface device 200.

The vehicle 100 may switch to the autonomous mode or the manual mode on the basis of travel situation information. The driving situation information may be generated on the basis of object information provided by an object detection device 300.

For example, the vehicle 100 may switch from the manual mode to the autonomous driving mode or from the autonomous driving mode to the manual mode on the basis of the driving situation information generated by the object detection device 300.

For example, the vehicle 100 may switch from the manual mode to the autonomous driving mode or from the autonomous driving mode to the manual mode on the basis of the driving situation information received through a communication device 400.

The vehicle 100 may switch from the manual mode into the autonomous mode or from the autonomous mode to the manual mode on the basis of information, data, signals, all of which are provided by an external device.

In a case where the vehicle 100 operates to drive in the autonomous mode, the autonomous vehicle 100 may operate to drive using a drive operation system 700.

For example, the autonomous driving vehicle 100 may be driven on the basis of information, data, and signals, all of which are generated by a driving system 710, a parking-lot departure system 740, and a parking system 750.

When the vehicle 100 operates to be driven in the manual mode, the autonomous vehicle 100 may receive a user input for a driving operation, through a driving maneuver apparatus 500. The vehicle 100 may be driven in response to the user input received through the driving operation apparatus 500.

The overall length refers to the length from the front end to the rear end of the vehicle 100, the width refers to the width of the vehicle 100, and the height refers to the length from the bottom of the wheel to the roof. In the following description, an overall-length direction L may refer to a direction which serves as a reference for measuring the overall length of the vehicle 100, a width direction W may refer to a direction that serves as a reference for measuring the width of the vehicle 100, and a height direction H may refer to a direction that serves as a reference for measuring the height of the vehicle 100.

As illustrated in FIG. 5, the vehicle 100 may include a user interface device 200, an object detection apparatus 300, a communication device 400, a driving operation apparatus 500, a vehicle drive apparatus 600, a driving system 700, a navigation system 770, a sensing unit 120, an interface unit 130, a memory 140, a control unit 170, and a power supply unit 190.

According to an embodiment, the vehicle 100 may include one or more constituent elements in addition to constituent elements described in the present specification or may omit one or more of the described constituent elements.

The user interface device 200 is a device for communication between the vehicle 100 and a user. The user interface device 200 may receive the user input and may provide information, generated by the vehicle 100, to the user. The vehicle 100 may implement a user interface (UI) or a user experience (UX) through the user interface device 200.

The user interface device 200 may include an input unit 210, an internal camera 220, a bio-sensing unit 230, an output unit 250, and a processor 270.

According to an embodiment, the user interface device 200 may further include one or more constituent elements in addition to the constituent elements described in the present specification or may omit one or more of the described constituent elements.

The input unit 200 is for receiving information from a user. Data collected from the input unit 120 is analyzed by the processor 270, and may be processed into a control command corresponding to user input.

The input unit 200 may be arranged within the vehicle. For example, the input unit 200 may be arranged on a region of one of the following: a steering wheel, an instrument panel, a seat, a pillar, a door, a center console, a head lining, a sun visor, a windshield, a window, or the like.

The input unit 200 may include a voice input part 211, a gesture input part 212, a touch input part 213, and a mechanical input part 214.

The voice input part 211 may convert a user's voice input into an electric signal. The electrical signal, resulting from the conversion, may be provided to the processor 270 or the control unit 170.

The voice input part 211 may include at least one microphone.

The gesture input part 212 may convert a user's gesture input into an electric signal. The electrical signal, resulting from the conversion, may be provided to the processor 270 or the control unit 170.

The gesture input part 212 may include at least one of the following: an infrared sensor or an image sensor, either of which serves to detect the user's gesture input.

According to an embodiment, the gesture input part 212 may detect a user's three-dimensional (3D) gesture input. To this end, the gesture input part 212 may include a plurality of light-emitting units, each emitting an infrared ray, or a plurality of image sensors.

The gesture input part 212 may detect the user's 3D gesture input through a Time-of-Flight (TOF) technique, a structured light technique, or a disparity technique.

The touch input part 213 may convert the user's touch input into an electric signal. The electrical signal, resulting from the conversion, may be provided to the processor 270 or the control unit 170.

The touch input part 213 may include a touch sensor for detecting the user's touch input.

According to an embodiment, the touch input part 213 may be integrally formed with a display part 251, thereby forming a touch screen. The touch screen may provide both an input interface and an output interface between the vehicle 100 and the user.

The mechanical input part 214 may include at least one of the following: a button, a dome switch, a jog wheel, or a jog switch. An electrical signal generated by the mechanical input part 214 may be provided to the processor 270 or the control unit 170.

The mechanical input part 214 may be arranged on a steering wheel, a center fascia, a center console, a cockpit module, a door, and equivalents thereof.

The internal camera 220 may acquire an image of the interior of the vehicle. The processor 270 may detect the user's state on the basis of the image of the interior of the vehicle 100. The processor 270 may acquire the user's gaze information from the image of the interior of the vehicle 100. The processor 270 may detect the user's gesture from the image of the interior of the vehicle 100.

The bio-sensing unit 230 may acquire the user's bio-information. The biometric detection unit 230 may include a sensor for acquiring the user's biometric information and may acquire the user's fingerprint information, heart rate information, and equivalents thereof using the sensor. The biometric information may be used for user authentication.

The output unit 250 may generate an output related to sight, hearing, or touch.

The output unit 250 may include at least one of the following: the display part 251, an audio output part 252, or a haptic output part 253.

Graphic objects corresponding to various types of information may be displayed on the display part 251.

The display part 251 may include at least one of the following: a liquid crystal display (LCD), a thin-film transistor-LCD (TFT LCD), an organic light-emitting diode (OLED), a flexible display, a three-dimensional (3D) display, or an E-Ink display.

The display part 251 may be inter-layered with, or integrally formed with, the touch input part 213, thereby realizing a touch screen.

The display part 251 may be configured as a Head-Up Display (HUD), a Center Information Display (CID), a Cluster, and/or a Rear Seat Entertainment (RSE). In a case where the display part 251 is configured as the HUD, the display part 251 may include a projection module, thereby outputting information through an image projected onto the window shield or the window.

Examples of the display part 251 may include a transparent display. The transparent display be attached to the window shield or the window.

The transparent display may have a predetermined degree of transparency and may output a predetermined screen thereon. To have transparency, the transparent display may include at least one of the following: a transparent Thin-Film Electroluminescent display, an Organic Light-Emitting Diode (OLED) display, a transparent Liquid Crystal Display (LCD), a transmission-type transparent display, or a transparent Light Emitting Diode (LED) display. The transparent display may have adjustable transparency.

The user interface device 200 may include a plurality of display parts, for example, display parts 251a to 251g.

The display part 251 is arranged in a region of a steering wheel, a region 521a, 251b, or 251e of an instrument panel, a region 251d of a seat, a region 251f of a pillar, a region 251g of a door, a region of a center console, a region of a head lining, or a region of a sun visor, or may be implemented in a region 261c of a windshield or a region 251h of a window.

Driving-related information for a driver may be displayed in the region 251a or 251b of the instrument panel. A personal infotainment display may be implemented in the region 251e of the instrument panel by a vehicular image device for an occupant seated on a front passenger seat. The personal infotainment display may be implemented in the region 251d of the seat by a vehicular image device for Rear Seat Entertainment (RSE).

The audio output part 252 converts an electric signal, provided from the processor 270 or the control unit 170, into an audio signal and outputs the resulting audio signal. To this end, the audio output part 252 may include at least one speaker.

The haptic output part 253 generates a tactile output. For example, the haptic output part 253 may operate to vibrate a steering wheel, a safety belt, and seats 110FL, 110FR, 110RL, and 110RR, thereby enabling the user to perceive a vibration output.

The processor 270 may control the overall operation of each unit of the user interface device 200.

According to an embodiment, the user interface device 200 may include a plurality of processors 270 or may be configured without including the processor 270.

In a case where the processor 270 is not included in the user interface device 200, the user interface device 200 may operate under the control of a processor of another apparatus within the vehicle 100 or under the control of the control unit 170.

The user interface device 200 may be referred to as a vehicle display apparatus.

The user interface device 200 may operate under the control of the control unit 170.

The object detection apparatus 300 is an apparatus for detecting an object located outside the vehicle 100.

The examples of the object include various entities related to operations of vehicle 100.

The vehicular image device according to the present disclosure will be described. In this regard, a vehicular display that displays various types of driving-related information is positioned below a driver's forward line of sight, thereby inducing rubbernecking and adversely affecting driving safety. Accordingly, in recent years, vehicles have been equipped with the vehicular image device, such as the head-up display (HUD), that projects an image onto the windshield that is positioned in the front of the vehicle and is in proximity to the driver's forward line of sight, thereby ensuring driving safety.

In addition, there is a need to install an infotainment device for providing personal information and personal entertainment content for an occupant seated in the front passenger seat or the rear seats of the vehicle. Therefore, there is a need to display driving-related information in a region in front of the driver's seat of the vehicle or to provide personal entertainment content in a region in front of the front passenger seat and the rear seats of the vehicle.

The driving-related information or entertainment content needs to be configured with an aspect ratio at which the width in one axial direction is greater, by a predetermined ratio or higher, than the length in the axial direction to be displayed in a specific region of the window shield positioned in the front of the vehicle. There is no specific suggestion as to which vehicular image device having which structure is provided at which portion of the vehicle to configure a screen having such a large aspect ratio.

To address this problem, an object of the present disclosure is to provide a vehicular image device having a large aspect ratio, the vehicular image device employing a projective optical system related to the vehicle. Another object of the present disclosure is to display driving-related information on a screen having a large aspect ratio in a specific region of a windshield positioned in the front of a vehicle. Another object of the present disclosure is to provide a vehicular image device having an optical structure and a special screen that are designed to enable an image to have a large aspect ratio using a single image module. A further object of the present disclosure is to generate continuous images having a large aspect ratio by using a single image module, the continuous images being associated with driving-related information. Another object of the present specification is to provide a vehicular image device having a reduced size and volume.

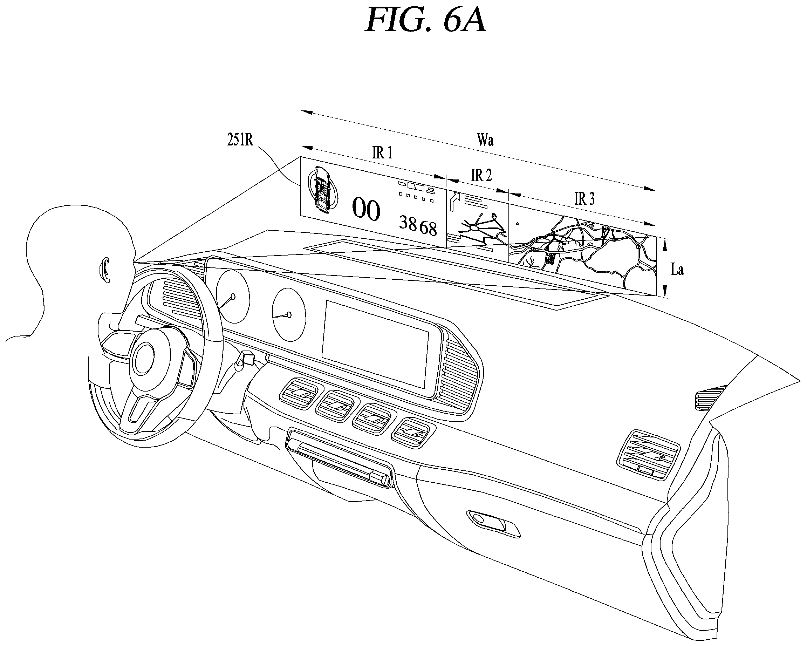

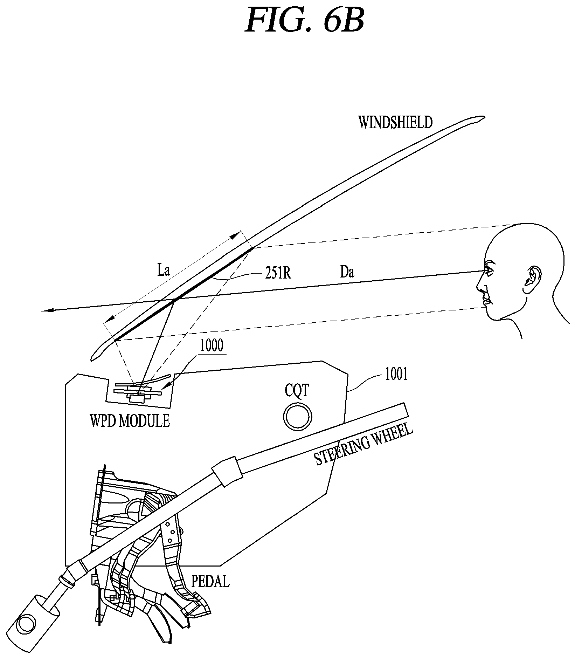

The vehicular image device capable of accomplishing the above-mentioned objects will be described in detail below with reference to the drawings. In this regard, FIG. 6A is a view illustrating a configuration in which a screen with a predetermined ratio is formed in a specific region of a front glass of a vehicle. FIG. 6b is a view illustrating a structure in which the vehicle video device for generating the screen with the predetermined ratio in the screen in FIG. 6A is arranged inside a dashboard of the vehicle.

With reference to FIG. 6A, an image having a width Wa in a first axial direction and a length La in a second axial direction may be displayed in a specific region 251R of the windshield of the vehicle. The image may be configured to include a plurality of image regions in which pieces of information necessary for vehicle driving are displayed. The plurality of image regions may include a first image region IR1, a second image region IR2, and a third image region IR3. A first image including the vehicle-related information may be displayed in the first image region IR1 that is most adjacent to the field of view of the driver of the vehicle. A second image related to a vehicle driving path may be displayed in the second image region IR2. A third image related to a map that includes a departure and a destination may be displayed in the third image region IR3. When the plurality of images are displayed in the specific region 251R, the width in the first axial direction may be set to have a larger ratio, for example, five times larger than the length La in the second axial direction.

With reference to FIGS. 6A and 6B, a vehicular image device 1000 may be arranged inside the dashboard of the vehicle. The vehicular image device 1000 may be arranged in a specific region inside the dashboard in such a manner as not to overlap a region in which a steering wheel and a pedal are arranged. An image that results from light being reflected by a screen panel 1200 constituting the vehicular image device 1000 may be displayed in the specific region 251R of the windshield of the vehicle. The specific region 251R may be formed to have the predetermined length La in such a manner that an image is displayed within the driver's field of view. A distance from the center of the driver's line of sight to the center of the specific region 251R may be set as a predetermined distance Da.

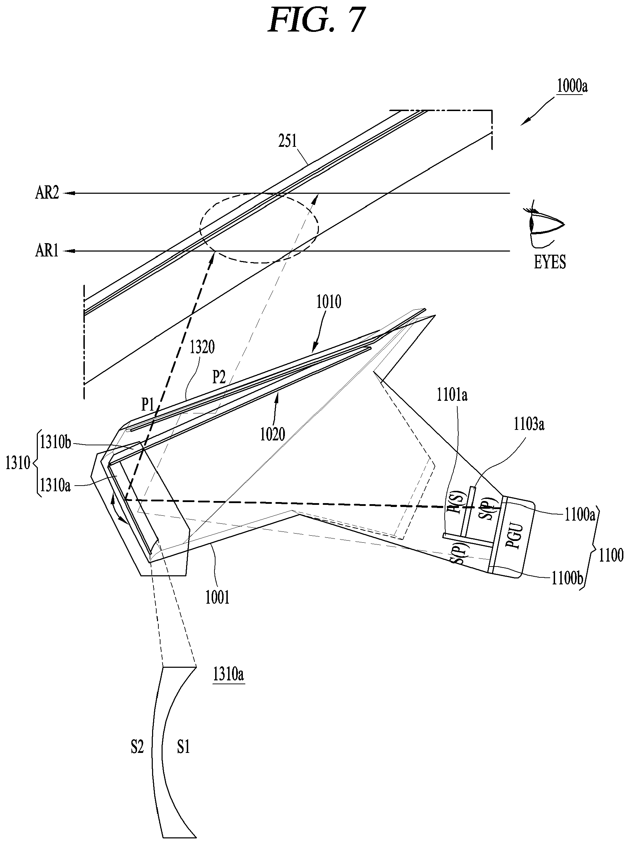

The vehicular image device according to the present disclosure will be described below. FIG. 7 is a view illustrating the structure of the vehicular image device having a first mirror and a second mirror. A vehicular image device 1000a in FIG. 7 may be configured to include a first cover 1010, a second cover 1020, a picture generation unit (PGU) 1100, and a plurality of mirrors, such as mirrors 1310 and 1320.

The first cover 1010 may be formed on the front surface of a dashboard 1001a of the vehicle. The second cover 1020 may be arranged more inward than the front surface of the dashboard 1001a. The second cover 1020 may be arranged more inward than the first cover 1010, arranged on the front surface of the dashboard 1001a in a manner spaced apart from the first cover 1010.

The picture generation unit (PGU) 1100 may be arranged inside the dashboard 1001a. The picture generation unit (PGU) 1100 may form a first optical signal and a second optical signal toward one lateral surface of the dashboard 1001a. The picture generation unit (PGU) 1100 may be arranged in such a manner that an optical signal formed toward one side is reflected by the first and second mirrors 1310 and 1320.

The picture generation unit (PGU) 1100 may be arranged inside the dashboard 1001a. The picture generation unit 1100 may be arranged to emit an optical signal toward one side. The picture generation unit 1100 includes various projection devices and a display that displays pixels on a screen. The picture generation unit 1100 may be configured as a liquid crystal display (LCD), an organic light-emitting diode (OLED) device, a Digital Light Processing (DLP) device, a Liquid Crystal on Silicon (LCoS) device, or a micro light-emitting diode (micro LED).

The picture generation unit (PGU) 1100 may be configured to include a first region 1100a and a second region 1100b. The first region 1100a and the second region 110b of the picture generation unit 1100 are formed integrally as one region or formed separately from each other. In a structure in which the picture generation unit 1100 is separated into the first region 1100a and the second region 1100b, the first region 1100a and the second region 1100b may correspond to a first PGU and a second PGU, respectively.

Switching between S-polarized light and P-polarized light, emitted from a display plane of the picture generation unit (PGU) 1100, may be performed as necessary. A polarization plate 1103 configured as a half-way plate (HWP) may be formed within an interior space of the dashboard inside the picture generation unit (PGU) 1100.

The first mirror 1310 may be arranged on one lateral surface of the dashboard 1001a and on the second cover 1020. The first mirror 1310 may be arranged to reflect the first optical signal and the second optical signal from one lateral surface of the dashboard 1001a. The second mirror 1320 may be arranged on the first cover 1010. The second mirror 1320 may be configured to transmit the first optical signal, reflected by the first mirror 1310, and the second optical signal, reflected by the first mirror 1310, arranged on one lateral surface of the dashboard 1001a.

The second mirror 1320 may be arranged on the first cover 1010. The second mirror 1320 may be configured to transmit the first optical signal, transmitted through the first mirror 1310, and the second optical signal, reflected by the first mirror 1310, arranged on the second cover 1320. Accordingly, the second mirror 1320 may be configured to transmit both the first optical signal and the second optical signal.

The PGU 1100, emitting optical signals, may be configured as a display plane. The vehicular image device 1000 may further include a vertical structure 1101a arranged vertically on the display plane of the PGU 1100. The vertical structure 1101a may be formed at a first height on the display plane in such a manner as to prevent interference between the first optical signal emitted from the first region 1100a of the PGU 1100 of the vertical structure 1101a, and the second optical signal emitted from the second region 1100b. The vertical structure 1101a may be arranged to minimize noise between image propagation paths emitted from the display plane, such as an LCD. The vertical structure 1101a may be arranged at the central point on one axis of the display plane of the PGU 1100, but is not limited to this arrangement. The arrangement of the vertical structure 1101a may vary according to the application.

The vehicular image device 1000 may further include a polarization plate 1103a arranged to be spaced apart from and parallel to the display plane of the PGU 1100. The polarization plate 1103a may be spaced at a second height from the display plane in the first region 1100a of the PGU 1100, and may be configured to convert polarization of the first optical signal. The polarization plate 1103a may convert the first optical signal having second polarization into the first optical signal having first polarization. The polarization plate 1103a may be configured as a half-way plate (HWP) that converts the S-polarized first optical signal into the P-polarized first optical signal, but is not limited to this conversion. The conversion may vary according to the application.

The first mirror 1310 may be arranged on one lateral surface of the dashboard 1001a and on the second cover 1020 that is an internal region. The first mirror 1310 may include a vertical portion arranged on one lateral surface of the dashboard 1001a and a horizontal portion arranged on the second cover 1020 that is an internal region. The first mirror 1310 may include a first portion 1310a, which is a vertical portion, and a second portion 1310b, which is a horizontal portion.

The first mirror 1310 may be configured to include the first portion 1310a and the second portion 1310b. The first portion 1310a of the first mirror 1310 may be arranged on one lateral surface of the dashboard 1001a. The first portion 1310a of the first mirror 1310, which is to be arranged on one lateral surface of the dashboard 1001a, may be formed to be concave. The first portion 1310a of the first mirror 1310 may form a concave mirror having a concave surface. The second portion 1310b of the first mirror 1310 may be connected to the first portion 1310a.

The shape of the first portion of the first mirror 1310 is not limited to a concave mirror that has a concave surface. The shape of the first portion 1310a of the first mirror 1310 may be configured as a convex mirror having a convex surface, a spherical mirror having a spherical surface, an aspherical mirror having an aspherical surface, a freeform mirror having a freeform surface, or a flat mirror having a flat surface, depending on the application. The second portion 1310b of the first mirror 1310 and the second mirror 1320 may include at least one of the following: a flat surface, a spherical surface, an aspherical surface, a cylindrical surface, or a freeform surface.

The second portion 1310b of the first mirror 1310 may be connected to the second cover 1020. The second part 1310b may be configured to transmit the first optical signal reflected by the first portion 1310a. The second portion 1310b may be configured to transmit the second optical signal reflected by the first portion 1310a. The second portion 1310b may be configured to reflect the second optical signal reflected by second mirror 1320. The second optical signal reflected by the second portion 1310b may be polarization-converted and may be transmitted through the second mirror 1320.

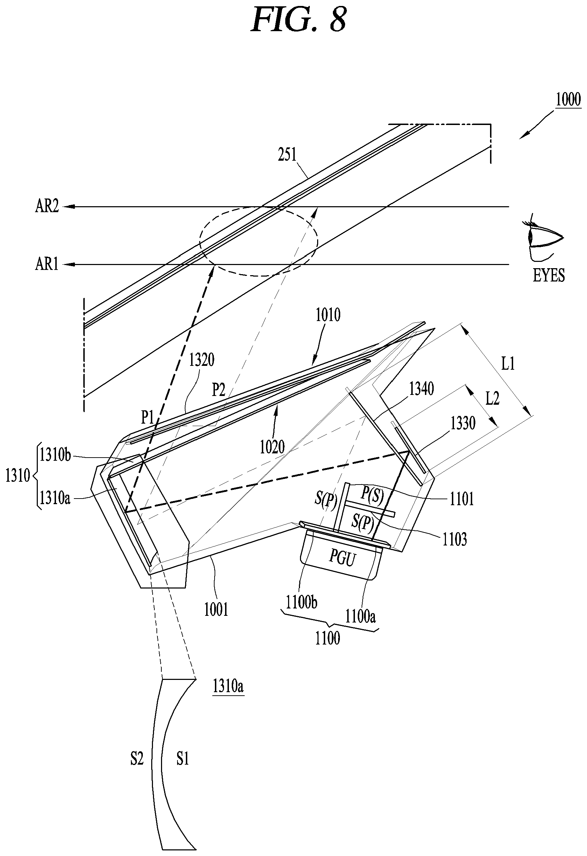

The vehicular image device 1000a in FIG. 7 may have a somewhat increased length, but a decreased height, and may be configured to have two mirrors, thereby simplifying the structure thereof. FIG. 8 is a view illustrating the structure of the vehicular image device that includes the first mirror, the second mirror, a third mirror, and a fourth mirror. The vehicular image device 1000a in FIG. 7 may have a reduced overall height because the vehicular image device 1000a does not have the respective reflection structures of the third and fourth mirrors. The vehicular image device 1000 in FIG. 8 may have a reduced overall length due to the respective reflection structures of third and fourth mirrors 1330 and 1340.

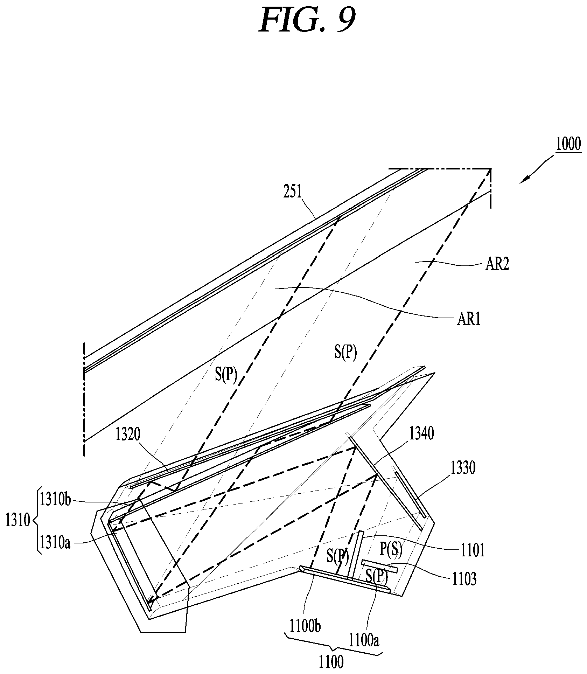

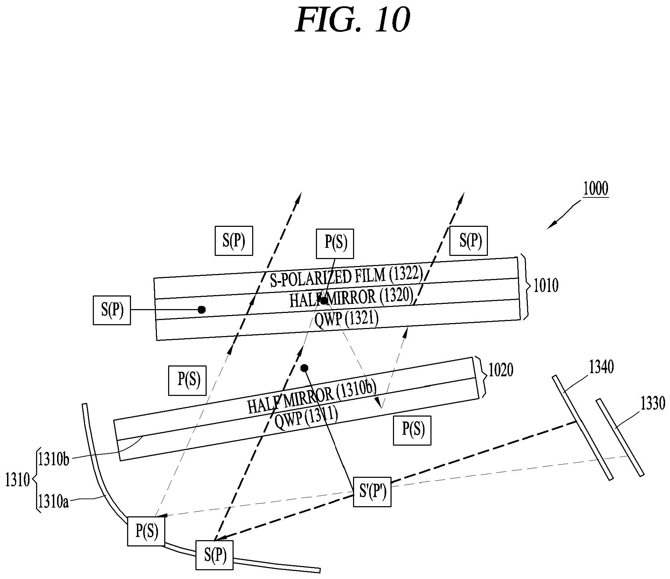

FIG. 9 is a view illustrating regions in which, in the vehicular image device in FIG. 8, the P-polarized first optical signal and the S-polarized second optical signal propagate after being reflected by the mirrors. FIG. 10 is a view illustrating a polarization state of a signal incident upon, transmitted through, and reflected by each structure of the vehicular image device.

The vehicular image device according to the present disclosure will be described with reference to FIGS. 8 and 10. The vehicular image device 1000 may be configured to include a first cover 1010, a second cover 1020, a picture generation unit (PGU) 1100, and a plurality of mirrors, such as the mirrors 1310, 1320, 1330, and 1340.

The first cover 1010 may be formed on the front surface of the dashboard 1001 of the vehicle. The second cover 1020 may be arranged more inward than the front surface of dashboard 1001. The second cover 1020 may be arranged more inward than the first cover 1010 arranged on the front surface of the dashboard 1001 in a manner spaced apart from the first cover 1010.

The first cover 1010 may be arranged at a first angle with respect to the horizontal plane. The second cover 1020 may be arranged at a second angle with respect to the horizontal plane. The first cover 1010 and the second cover 1020 may be formed to have the first angle greater than or equal to 0 and the second angle greater than or equal to 0, respectively. In this regard, the first cover 1010 and the second cover 1020 may be formed in such a manner that a separation therebetween is decreased in a region adjacent to the user (driver). The first cover 1010 and the second cover 1020 may be formed to have the first angle greater than or equal to 0 and the second angle greater than or equal to 0, respectively, in such a manner that the separation distance therebetween is decreased.

The first cover 1010 and the second cover 1020 may be formed to have the first angle and the second angle less than or equal to predetermined angles, respectively, depending on the specifications of the dashboard of the vehicle. The first cover 1010 and the second cover 1020 are formed in such a manner that the first angle and the second angle thereof are substantially the same or that the second angle of the second cover 1020 is greater by a threshold angle than the first angle of the first cover 1010.

The first cover 1010 forms an upper surface of the dashboard and prevents impurities, such as dust, from entering the dashboard, and thus may be referred to as an upper dust cover. The second cover 1020 forms a lower surface of the dashboard and prevents impurities, such as dust, from entering the dashboard, and thus may be referred to as a lower dust cover.

The first cover 1010 may be configured to have a three-layer structure that includes the second mirror 1320, configured as a half mirror, a polarization plate 1321, configured as a quarter-wave plate (QWP), and a polarization film 132. The second cover 1020 may be configured to a two-layer structure that includes the first mirror 1310 (the second portion 1310b thereof) configured as a half mirror, and a polarization plate 1311 configured as a QWP.

The polarization plate 1311, configured as a QWP of the second cover 1020, may be arranged on a layer proximate to an image reflected by the first portion 1310a of the first mirror 1310 that is a concave mirror. The polarization plate 1321, configured as the QWP of the first cover 1010, may be arranged on a layer proximate to the second cover 1020. The second mirror 1320, which is a half mirror, may be arranged between the polarization film 1322 that transmits S-polarized light and the polarization plate 1321, configured as a QWP.

The picture generation unit (PGU) 1100 may be arranged inside the dashboard 1001. The picture generation unit (PGU) 1100 may emit an optical signal toward one side. The picture generation unit (PGU) 1100 may be arranged in such a manner that an optical signal emitted toward one side is reflected by the third and fourth mirrors 1330 and 1340.

The picture generation unit (PGU) 1100 may be arranged inside the dashboard 1001. The picture generation unit (PGU) 1100 may be arranged to emit an optical signal toward one side. The picture generation unit 1100 includes various projection devices and a display that displays pixels on a screen. The picture generation unit 1100 may be configured as a liquid crystal display (LCD), an organic light-emitting diode (OLED) display, a DLP device, an LCoS device, or a micro light-emitting diode display.

The picture generation unit (PGU) 1100 may be configured to include the first region 1100a and the second region 1100b. The first region 1100a and the second region 110b of the picture generation unit 1100 are formed integrally as one region or formed separately from each other. In the structure in which the picture generation unit 1100 is separated into the first region 1100a and the second region 1100b, the first region 1100a and the second region 1100b may correspond to the first PGU and the second PGU, respectively.

Switching between the S-polarized light and the P-polarized light, emitted from the display plane of the picture generation unit (PGU) 1100, may be performed as necessary. The polarization plate 1103 configured as a half-way plate (HWP) may be formed within the interior space of the dashboard inside the picture generation unit (PGU) 1100.

The third mirror 1330 may be configured to have a first length L1 in such a manner as to reflect the first optical signal having the first polarization, which is emitted from the first region 1100a of the PGU 1100. The fourth mirror 1340 may be configured to have a second length L2 in such a manner as to reflect the second optical signal having the second polarization, which is emitted from the second region 1100b of the PGU 1100. The third mirror 1330 may be configured to reflect the P-polarized first optical signal, but is not limited to this configuration. The fourth mirror 1340 may be configured to reflect the S-polarized second optical signal, but is not limited to this configuration. The third mirror 1330 and the fourth mirror 1340 may be configured to reflect the first optical signal and the second optical signal, respectively, that have different orthogonal polarization components.

The third mirror 1330 may be configured to have the first length L1 along a first inclined axial direction. The fourth mirror 1340 may be arranged to overlap the third mirror 1330. The fourth mirror 1340 may be configured to have the second length L2 along a second inclined axial direction. The third mirror 1330 may be formed to have the first length L less than the second length L2 of the fourth mirror 1340. The third mirror 1330 may be arranged at a higher position than the fourth mirror 1340 along the vertical Z-axis.

The fourth mirror 1340 may be formed in such a manner that a second inclination axis thereof has a greater inclination angle than a first inclination axis of the third mirror 1330. The third mirror 1330 and the fourth mirror 1340 may be formed in such a manner that an angle difference between the first inclination axis and the second inclination axis is less than or equal to a predetermined angle. The third mirror 1330 and the fourth mirror 1340 may be formed to have a first inclination angle and a second inclination angle, respectively, each of which ranges from 0 degrees to 90 degrees.

The third mirror 1330 and the fourth mirror 1340 may be configured as folding mirrors. The third mirror 1330 and the fourth mirror 1340 may be configured to enable selective transmission and reflection according to polarization components. The third mirror 1330 and the fourth mirror 1340 may be configured as reflective polarizing mirrors, which are examples of types of selective transmission and reflection, or as wire grid polarizers, instead of half mirrors, but are not limited to this configuration. The configuration may vary according to the application. The third mirror 1330 and the fourth mirror 1340 may be separated into two folding mirrors or may be configured as a single folding mirror, depending on the application. When the third mirror 1330 and the fourth mirror 1340 are configured as a single folding mirror, the first region of the fourth mirror 1340 may be configured to reflect a signal having the first polarization (P polarization). When the third mirror 1330 and the fourth mirror 1340 are configured as a single folding mirror, the second region of the fourth mirror 1340 may be configured to reflect a signal having the second polarization (S polarization).

The first mirror 1310 and the second mirror 1320 may be configured to selectively reflect and transmit the first optical signal and the second optical signal, respectively. The first mirror 1310 and the second mirror 1320 may be configured as half mirrors to selectively reflect and transmit the first optical signal and the second optical signal, respectively.

The first mirror 1310 may be arranged on one lateral surface of the dashboard 1001 and on the second cover 1020. The first mirror 1310 may be configured to reflect the first optical signal and the second optical signal from one lateral surface of the dashboard 1001. The second mirror 1320 may be arranged on the first cover 1010. The second mirror 1320 may be configured to transmit the first optical signal, reflected by the first mirror 1310, and the second optical signal, reflected by the first mirror 1310 on one lateral surface of the dashboard 1001.

The first optical signal having the first polarization, the first optical signal being emitted from the first region 1100a of the PGU 1100, may be transmitted through the fourth mirror 1340, may be reflected by the third mirror 1330, and may be transmitted through the fourth mirror 1340. The first optical signal having the first polarization, the first optical signal being emitted from the first region 1100a of the PGU 1100, may be transmitted through the fourth mirror 1340 and may be reflected by the first mirror 1310. The second optical signal, having the second polarization, the second optical signal being emitted from the second region 1100b of the PGU 1100, may be reflected by the fourth mirror 1340. The second optical signal, having the second polarization, the second optical signal being emitted from the second region 1100b of the PGU 1100, may be reflected by the first mirror 1310 after being reflected by the fourth mirror 1340.

The second mirror 1320 may be arranged on the first cover 1010. The second mirror 1320 may be configured to transmit the first optical signal, reflected by the first mirror 1310, and the second optical signal, reflected by the first mirror 1310 on one lateral surface of the dashboard 1001. Accordingly, the second mirror 1320 may be configured to transmit both the first optical signal and the second optical signal.

The PGU 1100, emitting optical signals, may be configured as a display plane. The vehicular image device 1000 may further include a vertical structure 1101 arranged vertically on the display plane of the PGU 1100. The vertical structure 1101 may be formed at the first height on the display plane in such a manner as to prevent the interference between the first optical signal emitted from the first region 1100a of the PGU 1100, and the second optical signal emitted from the second region 1100b. The vertical structure 1101 may be arranged to minimize noise between the image propagation paths emitted from the display plane, such as an LCD. The vertical structure 1101 may be arranged at the central point on one axis of the display plane of the PGU 1100, but is not limited to this arrangement. The arrangement of the vertical structure 1101 may vary according to the application.

The vehicular image device 1000 may further include the polarization plate 1103 arranged to be spaced apart from and parallel to the display plane of the PGU 1100. The polarization plate 1103a may be spaced at the second height from the display plane in the first region 1100a of the PGU 1100 and may be configured to convert the polarization of the first optical signal. The polarization plate 1103 may be configured to introduce a phase delay of λ/2 to the first optical signal having the second polarization. At this point, λ corresponds to a wavelength. For example, the polarization plate 1103 may convert the first optical signal having the second polarization into the first optical signal having the first polarization. The polarization plate 1103 may be configured as a half-way plate (HWP) that converts the S-polarized (or P-polarized) first optical signal into the P-polarized (or S-polarized) first optical signal. However, the polarization plate 1103 is not limited to this configuration. The configuration may vary according to the application.

The first mirror 1310 may be arranged on one lateral surface of the dashboard 1001 and on the second cover 1020 that is an internal region. The first mirror 1310 may include a vertical portion arranged on one lateral surface of the dashboard 1001 and a horizontal portion arranged on the second cover 1020 that is an internal region. The first mirror 1310 may include the first portion 1310a, which is a vertical portion, and the second portion 1310b, which is a horizontal portion.

The first mirror 1310 may be configured to include the first portion 1310a and the second portion 1310b. The first portion 1310a of the first mirror 1310 may be arranged on one lateral surface of the dashboard 1001. The first portion 1310a of the first mirror 1310, arranged on one lateral surface of the dashboard 1001, may be configured to be concave. The first portion 1310a of the first mirror 1310 may form a concave mirror having a concave surface. The second portion 1310b of the first mirror 1310 may be connected to the first portion 1310a.

The first portion 1310a of the first mirror 1310 may be arranged on one lateral surface of the dashboard 1001. The second portion 1310b of the first mirror 1310 may be connected to the first portion 1310a. The second portion 1310b of the first mirror 1310 may be connected to the second cover 1020. The second part 1310b may be configured to transmit the first optical signal reflected by the first portion 1310a. The second portion 1310b may be configured to transmit the second optical signal reflected by the first portion 1310a. The second portion 1310b may be configured to reflect the second optical signal reflected by second mirror 1320. The second optical signal reflected by the second portion 1310b may be polarization-converted and may be transmitted through the second mirror 1320.

The first and second optical signals that are transmitted through different points on the second mirror 1320 may be displayed as images in different regions of the windshield 251. The first optical signal transmitted through a first point P1 on the second mirror 1320 may be displayed as a first AR image AR1 in a first region of the windshield 251 of the vehicle. After being initially reflected by the second portion of the first mirror 1310 and the second mirror 1320, the second optical signal transmitted through a second point P2 on the second mirror 1320 may be displayed as a second AR image AR2 in a second region of the windshield 251 of the vehicle. The second mirror 1320 may be arranged inside the vehicle in such a manner that the second point P2 on the second mirror 1320 is positioned more inward, in a manner adjacent to the user, than the first point P1. The first region and the second region of the windshield 251 may correspond to a lower portion and an upper portion, respectively, of the windshield 251.

The second mirror 1320 may be arranged in such a manner that the second point P2 thereon is most adjacent to the user within the vehicle. The second mirror 1320 may be arranged in such a manner that the second point P2 thereon is positioned farthest from the user within the vehicle. The first region, the second region, and the third region of the windshield 251 may correspond to a lower portion, a central portion, and an upper portion, respectively, of the windshield 251. Accordingly, the first AR image AR1 and the second AR image AR2 may correspond to a lower AR image, a central AR image, and an upper AR image, respectively. A structural feature of the second AR image AR2, which is the upper AR image, is that the second AR image AR2 is formed after being reflected two or more times by the first cover 1010 and the second cover 1020.

The first AR image AR1 and the second AR image AR2 are synthesized to form a field of view (FOV) for viewing an object ahead of the vehicle. The first AR image AR1 and the second AR image AR2 may be configured to display different indicators in different regions of the windshield 251.

As illustrated in FIG. 9, one or more of the regions in which the first AR image AR1 and the second AR image AR2 are displayed may be configured to overlap each other. The first AR image AR1 and the second AR image AR2 may be configured to be used to display an overlapping image in a specific region of the windshield 251. The first AR image AR1 and the second AR image AR2 may be configured to be transmitted through the second mirror 1320 adjacent to the windshield 251. The first AR image AR1 and the second AR image AR2 may be configured in such a manner that an area of respective overlapping portions of the first AR image AR1 and the second AR image AR2 is less than or equal to an area of a displayed portion of the first AR image AR1 or the second AR image AR2.

The first mirror 1310 and the second mirror 1320, which are arranged on the first cover 1010 and the second cover 1020, respectively, of the dashboard 1001, may be configured to have a stacking structure and thus to have a structure that enables selective reflection and transmission according to polarization components.

The first cover 1010 may be configured to include the second mirror 1320, the polarization plate 1321, and the polarization film 1322. The polarization plate 1321 may be arranged on a first surface of the second mirror 1320. The polarization film 1322 may be arranged on a second surface of the second mirror 1320. The first surface and the second surface of the second mirror 1320 may correspond to a rear surface and a surface, respectively, of the second mirror 1320, but are not limited to this configuration. The first surface and the second surface of the second mirror 1320 may also correspond to the front surface and the rear surface, respectively, of the second mirror 1320 according to the polarization of the first optical signal and the polarization of the second optical signal and/or to the application.

The second cover 1020 may be configured to include the first mirror 1310 (the second portion 1310b thereof) and the polarization plate 1311. The first mirror 1310 (the second portion 1310b thereof) may be configured as a half mirror configured to selectively transmit and reflect optical signals. The polarization plate 1311 may be arranged on the rear surface of the first mirror 1310. The polarization plate 1311 may be configured to convert the polarization of the first optical signal and the polarization of the second optical signal.

The polarization plate 1311 may be configured as a quarter-wave plate (QWP) that converts a P-polarized (or S-polarized) optical signal into an optical signal having first circular polarization (or second circular polarization), but is not limited to this conversion. The conversion may vary depending on the application. The polarization plate 1331 converts the first optical signal having the first polarization (P polarization) into the first optical signal having first circular polarization (left-handed circular polarization). The polarization plate 1331 converts the second optical signal having the second polarization (S polarization) into the second optical signal having second circular polarization (right-handed circular polarization). The polarization plate 1341 converts the second optical signal having the first polarization (P polarization), the second optical signal being reflected by the second mirror 1320, into the second optical signal having the first circular polarization (left-handed circular polarization).

The polarization plate 1321 may be arranged on the first surface of the second mirror 1320. The polarization plate 1321 may be configured to convert the polarization of the first optical signal and the polarization of the second optical signal. The polarization plate 1321 may be configured as the quarter-wave plate (QWP) that converts an optical signal having the left-handed circular polarization (or the right-handed circular polarization) into an S-polarized (or P-polarized) optical signal, but is not limited to this conversion. The conversion may vary depending on the application. The polarization plate 1321 converts the first optical signal having the first circular polarization (left-handed circular polarization) into the first optical signal having the second polarization (S polarization). The polarization plate 1321 converts the second optical signal having the second circular polarization (right-handed circular polarization) into the second optical signal having the first polarization (P polarization). The polarization plate 1321 converts the second optical signal having the first circular polarization (left-handed circular polarization), the second optical signal being reflected by the first mirror 1310, into the second optical signal having the second polarization (S polarization).

The polarization film 1322 may be arranged on the second surface of the second mirror 1320. The polarization film 1322 may be formed to allow respective second polarization (S polarization) components of the first optical signal and the second optical signal to pass through. The polarization film 1322 may be configured as an S polarization film that blocks (reflects) respective first polarization (P polarization) components of the first optical signal and the second optical signal and allows the second polarization (S polarization) component to pass through.

The polarization film 1322 may be configured to allow the first optical signal having the second polarization (S polarization), the first optical signal resulting from the conversion by the polarization plate 1321, to pass through. The polarization film 1322 may be configured to block (reflect) the second optical signal having the first polarization (P polarization), the second optical signal resulting from the conversion by the polarization plate 1341. The polarization film 1322 may be configured to allow the second optical signal having the second polarization (S polarization), the second optical signal resulting from the conversion by the polarization plate 1321, to pass through.

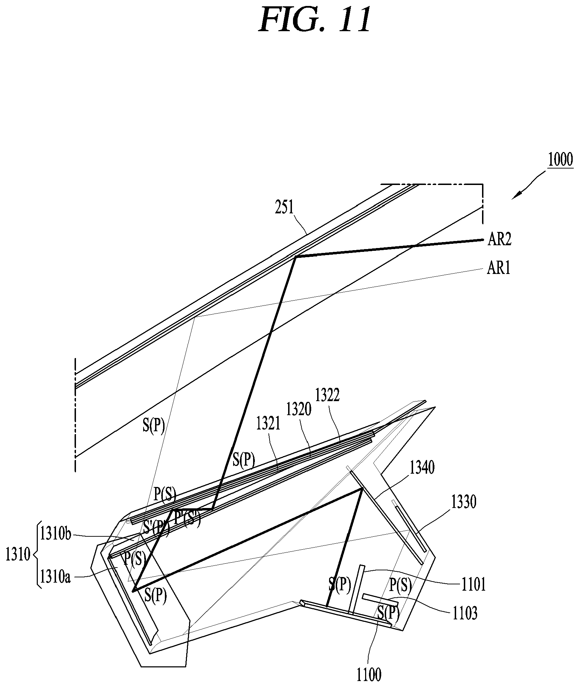

In the vehicular image device according to the present disclosure, the first and second mirrors, arranged on the first cover and the second cover, respectively, may be formed to have a stacking structure, thereby selectively reflecting or transmitting the P-polarized and S-polarized optical signals. FIGS. 11 to 13 are views illustrating the vehicular image devices that include different stacking structures of the first and second mirrors according to embodiments.

FIG. 11 illustrates the vehicular image device having respective stacking structures of the first and second covers. With reference to FIGS. 10 and 11, the first cover 1010 and the second cover 1020 of the dashboard may be formed to have a stacking structure and thus to have a structure that enables selective reflection and transmission according to polarization components.

The first cover 1010 may be configured to include the second mirror 1320, the polarization plate 1321, and the polarization film 1322. The polarization plate 1321 may be arranged on the rear surface of the second mirror 1320. The polarization film 1322 may be arranged on the front surface of the second mirror 1320.

The second cover 1020 may be configured to include the first mirror 1310 (the second portion 1310b thereof) and the polarization plate 1311. The first mirror 1310 (the second portion 1310b thereof) may be configured as a half mirror configured to selectively transmit and reflect optical signals. The polarization plate 1311 may be arranged on the rear surface of the first mirror 1310. The polarization plate 1311 may be configured to convert the polarization of the first optical signal and the polarization of the second optical signal.

The polarization plate 1311 may be configured as a quarter-wave plate (QWP) that converts a P-polarized (or S-polarized) optical signal into an optical signal having first circular polarization (or second circular polarization). The polarization plate 1331 converts the first optical signal having the first polarization (P polarization) into the first optical signal having first circular polarization (left-handed circular polarization). The polarization plate 1331 converts the second optical signal having the second polarization (S polarization) into the second optical signal having second circular polarization (right-handed polarization). The polarization plate 1341 converts the second optical signal having the first polarization (P polarization), the second optical signal being reflected by the second mirror 1320, into the second optical signal having the first circular polarization (left-handed circular polarization).

The polarization plate 1321 may be arranged on the rear surface of the second mirror 1320. The polarization plate 1321 may be configured to convert the polarization of the first optical signal and the polarization of the second optical signal. The polarization plate 1321 may be configured as the quarter-wave plate (QWP) that converts an optical signal having the left-handed circular polarization (or the right-handed circular polarization) into an S-polarized (or P-polarized) optical signal. The polarization plate 1321 converts the first optical signal having the first circular polarization (left-handed circular polarization) into the first optical signal having the second polarization (S polarization). The polarization plate 1321 converts the second optical signal having the second circular polarization (right-handed circular polarization) into the second optical signal having the first polarization (P polarization). The polarization plate 1321 converts the second optical signal having the first circular polarization (left-handed circular polarization), the second optical signal being reflected by the first mirror 1310, into the second optical signal having the second polarization (S polarization).

The polarization film 1322 may be stacked on the front surface of the second mirror 1320. The polarization film 1322 may be formed to allow the respective second polarization (S polarization) components of the first optical signal and the second optical signal to pass through. The polarization film 1322 may be configured as the S polarization film that blocks (reflects) the respective first polarization (P polarization) components of the first optical signal and the second optical signal and allows the second polarization (S polarization) component to pass through.

The polarization film 1322 may be configured to allow the first optical signal having the second polarization (S polarization), the first optical signal resulting from the conversion by the polarization plate 1321, to pass through. The polarization film 1322 may be configured to block (reflect) the second optical signal having the first polarization (P polarization), the second optical signal resulting from the conversion by the polarization plate 1341. The polarization film 1322 may be configured to allow the second optical signal having the second polarization (S polarization), the second optical signal resulting from the conversion by the polarization plate 1321, to pass through.

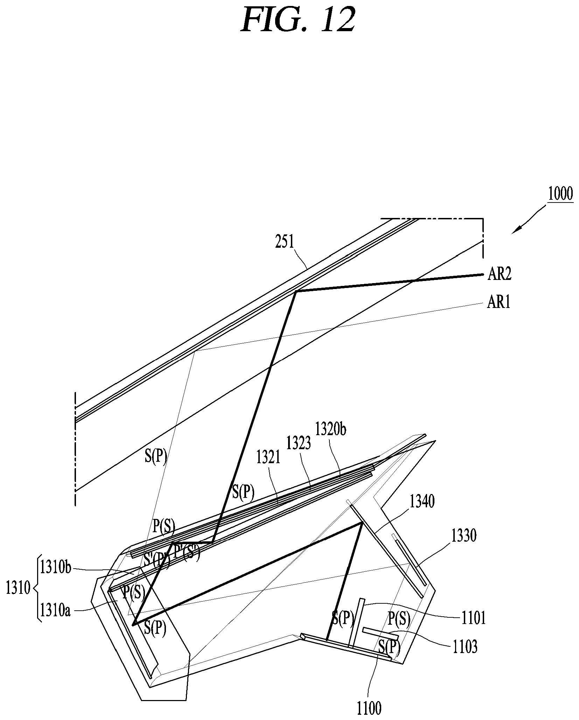

FIG. 12 illustrates the vehicular image device that has the stacking of the first cover, including the polarization plate 1321, a transparent portion 1323, and a second mirror 1320b. With reference to FIG. 12, the first cover 1010 and the second cover 1020 of the dashboard may be formed to have a stacking structure and thus to have a structure that enables selective reflection and transmission according to polarization components. Since a stacking structure of the second cover 1020 in FIG. 12 is the same as that of the second cover 1020 in FIGS. 10 and 11, a detailed description thereof is omitted.

With reference to FIGS. 10 and 12, the first cover 1010 may be configured to include the polarization plate 1321, the transparent portion 1323, and the second mirror 1320b. The polarization plate 1321 may be arranged on a rear surface of the transparent portion 1323. The second mirror 1320b may be arranged on a front surface of the transparent portion 1323.

The polarization plate 1321 may be stacked on the rear surface of the transparent portion 1323. The polarization plate 1321 may be configured to convert the polarization of the first optical signal and the polarization of the second optical signal. The polarization plate 1321 may be configured as the quarter-wave plate (QWP) that converts an optical signal having the left-handed circular polarization (or the right-handed circular polarization) into an S-polarized (or P-polarized) optical signal. The polarization plate 1321 converts the first optical signal having the first circular polarization (left-handed circular polarization) into the first optical signal having the second polarization (S polarization). The polarization plate 1321 converts the second optical signal having the second circular polarization (right-handed circular polarization) into the second optical signal having the first polarization (P polarization). The polarization plate 1321 converts the second optical signal having the first circular polarization (left-handed circular polarization), the second optical signal being reflected by the first mirror 1310, into the second optical signal having the second polarization (S polarization).

The transparent portion 1323 may be formed of a transparent glass pane or a transparent glass sheet. The transparent portion 1323 may be configured to allow the first optical signal and the second optical signal, which result from the conversion by the polarization plate 1321, to pass through.

The second mirror 1320b may be stacked on the front surface of the transparent portion 1323. The polarization plate 1321b may be configured to convert the polarization of the first optical signal and the polarization of the second optical signal. The second mirror 1320b may be configured as a reflective polarizing mirror, which is an example of a type of selective transmission and reflection, or as a wire grid polarizer, instead of a half mirror, but is not limited to this configuration. The configuration may vary according to the application. The second mirror 1320b may be configured to allow an optical signal, having specific polarization, to pass through and to reflect an optical signal having orthogonal polarization orthogonal to the specific polarization. The second mirror 1320b may be configured to allow an S-polarized optical signal to pass through and to reflect a P-polarized optical signal.

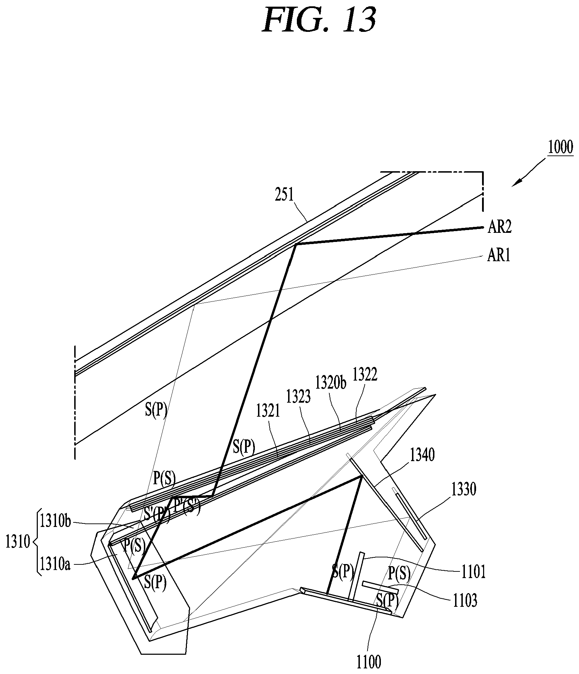

FIG. 13 illustrates the vehicular image device having the stacking structure of the first cover that includes the polarization plate 1321, the transparent portion 1323, the second mirror 1320b, and the polarization film 1322. With reference to FIG. 13, the first cover 1010 and the second cover 1020 of the dashboard are formed to have a stacking structure and thus to have a structure that enables selective reflection and transmission according to polarization components. Since a stacking structure of the second cover 1020 in FIG. 13 is the same as that of the second cover 1020 in FIGS. 10 and 11, a detailed description thereof is omitted.

The first cover 1010 may be configured to include the polarization plate 1321, the transparent portion 1323, the second mirror 1320b, and the polarization plate 1322. The polarization plate 1321 may be arranged on the rear surface of the transparent portion 1323. The second mirror 1320b may be arranged on the front surface of the transparent portion 1323.

The polarization plate 1321 may be stacked on the rear surface of the transparent portion 1323. The polarization plate 1321 may be configured to convert the polarization of the first optical signal and the polarization of the second optical signal. The polarization plate 1321 may be configured as the quarter-wave plate (QWP) that converts an optical signal having the left-handed circular polarization (or the right-handed circular polarization) into an S-polarized (or P-polarized) optical signal. The polarization plate 1321 converts the first optical signal having the first circular polarization (left-handed circular polarization) into the first optical signal having the second polarization (S polarization). The polarization plate 1321 converts the second optical signal having the second circular polarization (right-handed circular polarization) into the second optical signal having the first polarization (P polarization). The polarization plate 1321 converts the second optical signal having the first circular polarization (left-handed circular polarization), the second optical signal being reflected by the first mirror 1310, into the second optical signal having the second polarization (S polarization).

The transparent portion 1320b may be formed of a transparent glass pane or a transparent glass sheet. The transparent portion 1320b may be configured to allow the first optical signal and the second optical signal, which result from the conversion by the polarization plate 1321, to pass through.

The second mirror 1320b may be stacked on the front surface of the transparent portion 1323. The polarization plate 1321b may be configured to convert the polarization of the first optical signal and the polarization of the second optical signal. The second mirror 1320b may be configured as a reflective polarizing mirror, which is an example of a type of selective transmission and reflection, or as a wire grid polarizer, instead of a half mirror, but is not limited to this configuration. The configuration may vary according to the application. The second mirror 1320b may be configured to allow an optical signal, having specific polarization, to pass through and to reflect an optical signal having orthogonal polarization orthogonal to the specific polarization. The second mirror 1320b may be configured to allow an S-polarized optical signal to pass through and to reflect a P-polarized optical signal.

The polarization film 1322 may be stacked on the front surface of the second mirror 1320b. The polarization film 1322 may be formed to allow the respective second polarization (S polarization) components of the first optical signal and the second optical signal to pass through. The polarization film 1322 may be configured as an S polarization film that blocks (reflects) the respective first polarization (P polarization) components of the first optical signal and the second optical signal and allows the second polarization (S polarization) component to pass through.

The polarization film 1322 may be configured to transmit the first optical signal having the second polarization (S polarization), the first optical signal resulting from the conversion by the polarization plate 1321 and being transmitted through the transparent portion 1320b and the second mirror 1320b. The polarization film 1322 may be configured to block (reflect) the second optical signal having the first polarization (P polarization), the second optical signal resulting from the conversion by the polarization plate 1341. The polarization film 1322 may be configured to allow the second optical signal having the second polarization (S polarization), the second optical signal resulting from the conversion by the polarization plate 1321, to pass through.

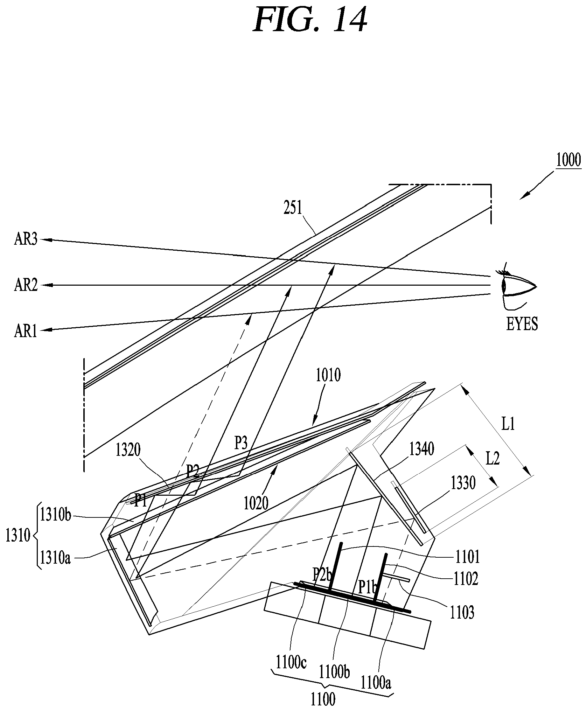

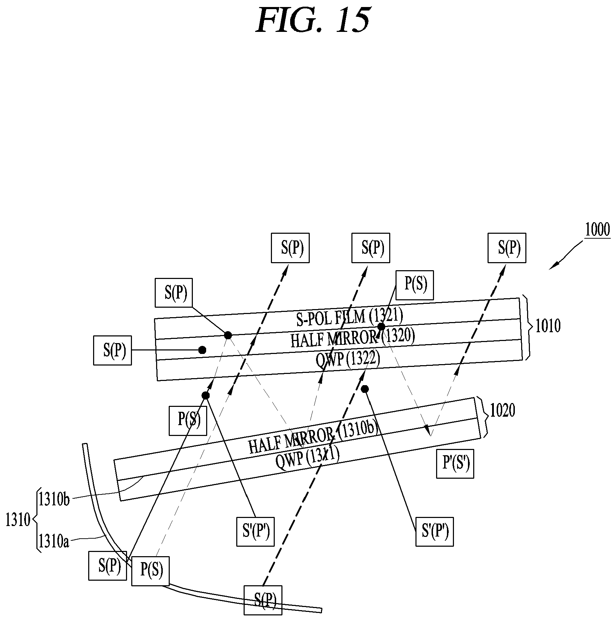

The vehicular image device according to the present disclosure may be formed to have a three-layer structure to display three AR images. In this regard, FIG. 14 is a view illustrating the structure of the vehicular image device capable of displaying three AR images. FIG. 15 is a view illustrating the polarization state of a signal incident upon, transmitted through, and reflected by each structure of the vehicular image device in FIG. 14.

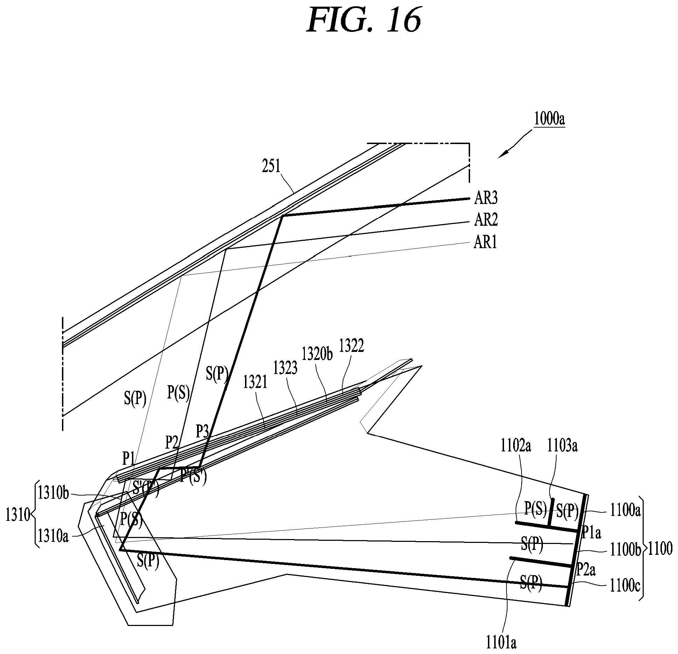

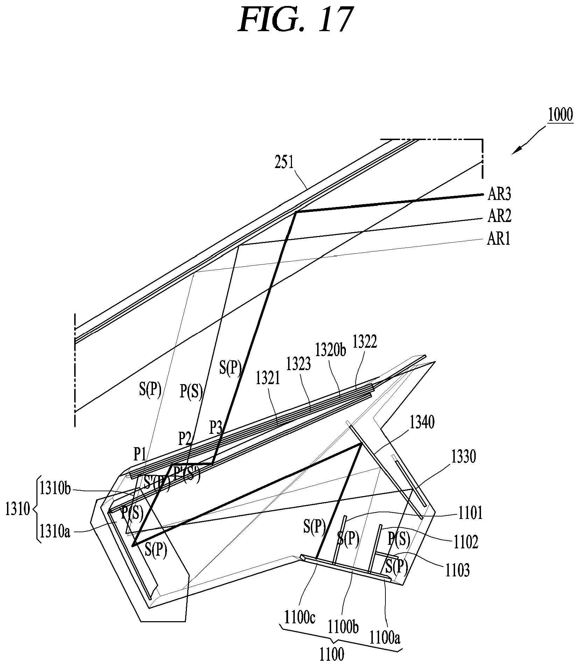

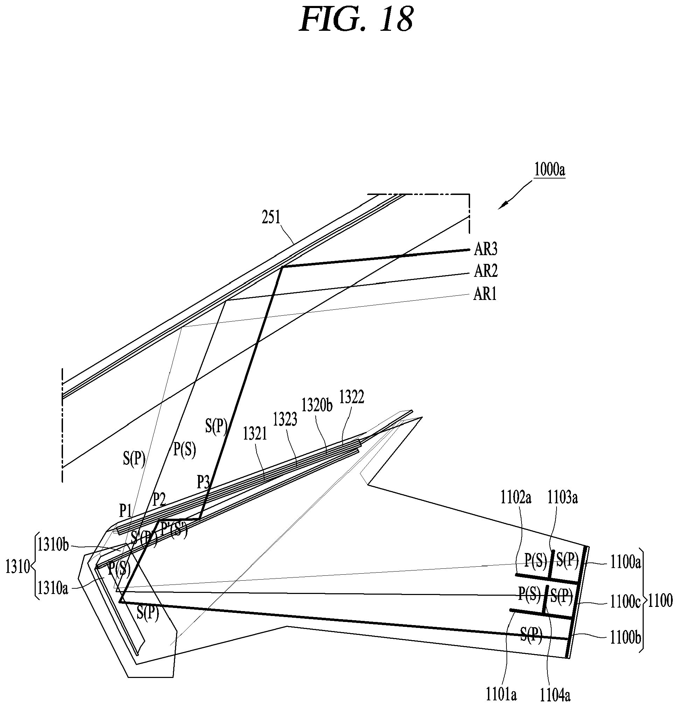

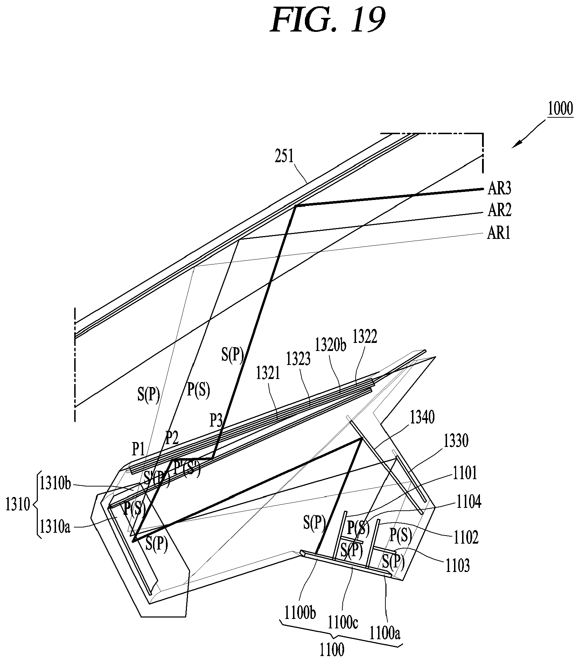

FIG. 16 is a view illustrating propagation paths for P-polarized, S-polarized, and S-polarized optical signals associated with respective regions of the PGU of the vehicular image device in FIG. 7. FIG. 17 is a view illustrating propagation paths for P-polarized, S-polarized, and S-polarized optical signals associated with respective regions of the PGU of the vehicular image device in FIGS. 8 and 14. FIG. 18 is a view illustrating propagation paths for P-polarized, P-polarized, and S-polarized optical signals associated with respective regions of the PGU of the vehicular image device in FIG. 7. FIG. 19 is a view illustrating propagation paths for P-polarized, P-polarized, and S-polarized optical signals associated with respective regions of the PGU of the vehicular image device in FIGS. 8 and 14.

With reference to FIGS. 7, 10, 15, and 16, the first cover 1010 may be configured to include the second mirror 1320, the polarization plate 1321, and the polarization film 1322. The polarization plate 1321 may be arranged on the first surface of the second mirror 1320 and may be configured to convert the first optical signal and the second optical signal. The polarization film 1322 may be arranged on the second surface of the second mirror 1320 and may be formed to allow respective second polarization components of the first light signal and the second light signal to pass through.

The second cover 1020 may be configured to include the first mirror 1310 (the second portion 1310b thereof) and the polarization plate 1311. The first mirror 1310 (the second portion 1310b thereof) may be configured as a half mirror configured to selectively transmit and reflect optical signals. The polarization plate 1311 may be arranged on the rear surface of the first mirror 1310. The polarization plate 1311 may be configured to convert the polarization of the first optical signal and the polarization of the second optical signal.

With reference to FIGS. 7 and 16, the PGU 1100 may be configured to have a plurality of regions to display the first AR image AR1, the second AR image AR2, and a third AR image AR3. PGUs may be arranged in the plurality of regions, respectively, of the PGU 1100. The PGU 1100 may be configured to include a first PGU 1100a, a second PGU 1100b, and a third PGU 1100c. The first PGU 1100a may be arranged in a first region of the PGU 1100. The first PPU 1100a may be configured to emit the first optical signal having the first polarization (P polarization) component. The second PGU 1100b may be arranged in a second region of the PGU 1100. The second PGU 1100b may be configured to emit the second optical signal having the second polarization (S polarization) component. The third PGU 1100c may be arranged in a third region adjacent to the second region of the PGU 1100. The third PGU 1100c may be configured to emit a third optical signal having the second polarization (S polarization) component.

The PGU 1100 may be configured as a display plane. The PGU 1100 may be configured to include a first vertical structure 1101a and a second vertical structure 1101a. The first vertical structure 1101a may be formed at a first height at a first point P1a on the display plane to prevent the interference between the first optical signal emitted from the first region and the second optical signal emitted from the second region. The second vertical structure 1102a may be formed at a second height at a second point P2a on the display plane to prevent interference between the second optical signal emitted from the second region and the third optical signal emitted from the third region. The first and second vertical structures 1101a and 1102a may be arranged to minimize noise between the image propagation paths emitted from the display plane, such as an LCD.

The first vertical structure 1101a and the second vertical structure 1102a may be formed in such a manner that the first height of the first vertical structure 1101a is equal to the second height of the second vertical structure 1102a. The first point at which the first vertical structure 1101a is arranged and the second point at which the second vertical structure 1102a is arranged may be defined as points obtained by dividing one axis of the PGU 1100 into thirds, but are not limited to this definition. The definition may vary according to the application.

The vehicular image device 1000a may further include the polarization plate 1103a arranged to be spaced apart from and parallel to the display plane of the PGU 1100. The polarization plate 1103a may be spaced at a third height from the display plane in the first region 1100a of the PGU 1100, and may be configured to convert the polarization of the first optical signal. The polarization plate 1103a may convert the first optical signal having the second polarization into the first optical signal having the first polarization. The polarization plate 1103a may be configured as a half-way plate (HWP) that converts the S-polarized first optical signal into the P-polarized first optical signal, but is not limited to this conversion. The conversion may vary according to the application.

The first to third regions of the PGU 1100 may be configured in such a manner that the first to third optical signals emitted therefrom are selectively reflected by and transmitted through the mirrors in a manner that varies according to the polarization state.

The first to third optical signals emitted from the respective regions of the PGU 1100 may form the first to third AR images AR1 to AR3 that are displayed in different regions of the windshield 251. The first optical signal transmitted through the second portion 1310b of the first mirror 1310 and the first point P1 on the second mirror 1320 may be displayed as the first AR image AR1 in the first region of the windshield 251 of the vehicle. After being initially reflected by the second mirror 1320, the second optical signal transmitted through the second point P2 on the second mirror 1320 may be displayed as the second AR image AR2 in the second region of the windshield 251. After being initially reflected by the second mirror 1320, the third optical signal transmitted through a third point P3 on the second mirror 1320 may be displayed as the third AR image AR3 in the third region of the windshield 251.

The second mirror 1320 may be arranged in such a manner that the third point P3 thereon is most adjacent to the user within the vehicle. The second mirror 1320 may be arranged in such a manner that the second point P2 thereon is positioned farthest from the user within the vehicle. The first region, the second region, and the third region of the windshield 251 may correspond to the lower portion, the central portion, and the upper portion, respectively, of the windshield 251. Accordingly, the first AR image AR1, the second AR image AR2, and the third AR image AR3 may correspond to a lower AR image, a central AR image, and an upper AR image, respectively. A structural feature of the third AR image AR3, which is the upper AR image, is that the third AR image AR3 is formed after being reflected two or more times by the first cover 1010 and the second cover 1020.

The first AR image AR1, the second AR image AR2, and the third AR image AR3 are synthesized to form a field of view (FOV) for viewing an object ahead of the vehicle. The first AR image AR1, the second AR image AR2, and the third AR image AR3 may be configured to display different indicators in different regions of the windshield 251.

One or more of the regions in which the first AR image AR1, the second AR image AR2, and the third AR image AR3 are displayed may be configured to overlap each other. Accordingly, two or more of the first AR image AR1, the second AR image AR2, and the third image AR3 may be configured to be used to display an overlapping image in a specific region of the windshield 251. The first AR image AR1 and the second AR image AR2, and the second AR image AR2 and the third AR image AR3 may be configured to be used to display an overlapping image in a specific region of the windshield 251. The first AR image AR1, the second AR image AR2, and the third AR image AR3 may be transmitted through the second mirror 1320 adjacent to the windshield 251. The first AR image AR1 and the second AR image AR2 may be configured in such a manner that the area of the respective overlapping portions of the first AR image AR1 and the second AR image AR2 is less than or equal to the area of the displayed portion of the first AR image AR1 or the second AR image AR2 The second AR image AR2 and the third AR image AR3 may be configured in such a manner that an area of respective overlapping portions of the second AR image AR2 and the third AR image AR3 is less than or equal to an area of respective displayed portions thereof.

With reference to FIGS. 14, 15, and 17, the PGU 1100 may be configured to have a plurality of regions to display the first to third AR images AR1, AR2, and AR3. PGUs may be arranged in the plurality of regions, respectively, of the PGU 1100. The PGU 1100 may be configured to include the first PGU 1100a, the second PGU 1100b, and the third PGU 1100c. The first PGU 1100a may be arranged in the first region of the PGU 1100. The first PPU 1100a may be configured to emit the first optical signal having the first polarization (P polarization) component. The second PGU 1100b may be arranged in a second region of the PGU 1100. The second PGU 1100b may be configured to emit the second optical signal having the second polarization (S polarization) component. The third PGU 1100c may be arranged in the third region adjacent to the second region of the PGU 1100. The third PGU 1100c may be configured to emit the third optical signal having a second polarization (S polarization) component.

The PGU 1100 may be configured as a display plane. The PGU 1100 may be configured to include the first vertical structure 1101 and the second vertical structure 1102. The first vertical structure 1101 may be formed at a first height at a first point P1b on the display plane to prevent the interference between the first optical signal emitted from the first region and the second optical signal emitted from the second region. The second vertical structure 1102 may be formed at a second height at a second point P2b on the display plane to prevent the interference between the second optical signal emitted from the second region and the third optical signal emitted from the third region. The first and second vertical structures 1101 and 1102 may be arranged to minimize noise between the image propagation paths emitted from the display plane, such as an LCD.

The first vertical structure 1101 and the second vertical structure 1102 may be formed in such a manner that the first height of the first vertical structure 1101 is equal to the second height of the second vertical structure 1102. The first point at which the first vertical structure 1101 is arranged and the second point at which the second vertical structure 1102 is arranged may be defined as points obtained by dividing one axis of the PGU 1100 into thirds, but are not limited to this definition. The definition may vary according to the application.

The vehicular image device 1000 may further include the polarization plate 1103 arranged to be spaced apart from and parallel to the display plane of the PGU 1100. The polarization plate 1103 may be spaced at the third height from the display plane in the first region 1100a of the PGU 1100 and may be configured to convert the polarization of the first optical signal. The polarization plate 1103 may be configured to introduce a phase delay of λ/2 to the first optical signal having the second polarization. For example, the polarization plate 1103 may convert the first optical signal having the second polarization into the first optical signal having the first polarization. The polarization plate 1103 may be configured as an HWP that converts the S-polarized (or P-polarized) first optical signal into the P-polarized (or S-polarized) first optical signal. However, the polarization plate 1103 is not limited to this configuration. The configuration may vary according to the application.

The first to third regions of the PGU 1100 may be configured in such a manner that the first to third optical signals emitted therefrom are selectively reflected by and transmitted through the mirrors in a manner that varies according to the polarization state.

The first optical signal having the first polarization component, emitted from the first region 1100a of the PGU 1100, may be transmitted through the fourth mirror 1340, reflected by the third mirror 1320, and transmitted through the fourth mirror 1340. The first optical signal having the first polarization component, emitted from the first region 1100a of the PGU 1100, may be reflected by the first portion1310a of the first mirror 1310 and transmitted through the second portion 1310b of the first mirror 1310 and the second mirror 1320.

The second optical signal, having the second polarization component, emitted from the second region 1100b of the PGU 1100, may be reflected by the fourth mirror 1340 and the first portion1310a of the first mirror 1310 and transmitted through the second portion 1310b of the first mirror 1310. The second optical signal having the second polarization component, emitted from the second region 100b of the PGU 1100, may be reflected by the second mirror 1320 and the second portion 1310b of the first mirror 1310, and transmitted through the second mirror 1320.

The third optical signal having the second polarization component, emitted from the third region 1100c of the PGU 1100, may be reflected by the fourth mirror 1340 and the first portion1310a of the first mirror 1310 and transmitted through the second portion 1310b of the first mirror 1310. The third optical signal having the second polarization component, emitted from the third region 1100c of the PGU 1100, may be reflected by the second mirror 1320 and the second portion1310b of the first mirror 1310 and transmitted through the second mirror 1320.

The first to third optical signals emitted from the respective regions of the PGU 1100 may form the first to third AR images AR1 to AR3 that are displayed in different regions of the windshield 251. The first optical signal transmitted through the second portion 1310b of the first mirror 1310 and the first point P1 on the second mirror 1320 may be displayed as the first AR image AR1 in the first region of the windshield 251 of the vehicle. After being initially reflected by the second mirror 1320, the second optical signal transmitted through the second point P2 on the second mirror 1320 may be displayed as the second AR image AR2 in the second region of the windshield 251. After being initially reflected by the second mirror 1320, the third optical signal transmitted through the third point P3 on the second mirror 1320 may be displayed as the third AR image AR3 in the third region of the windshield 251.

The second mirror 1320 may be arranged in such a manner that the third point P3 thereon is most adjacent to the user within the vehicle. The second mirror 1320 may be arranged in such a manner that the second point P2 thereon is positioned farthest from the user within the vehicle. The first region, the second region, and the third region of the windshield 251 may correspond to the lower portion, the central portion, and the upper portion, respectively, of the windshield 251. Accordingly, the first AR image AR1, the second AR image AR2, and the third AR image AR3 may correspond to a lower AR image, a central AR image, and an upper AR image, respectively. The structural feature of the third AR image AR3, which is the upper AR image, is that the third AR image AR3 is formed after being reflected two or more times by the first cover 1010 and the second cover 1020.

The first AR image AR1, the second AR image AR2, and the third AR image AR3 are synthesized to form a field of view (FOV) for viewing an object ahead of the vehicle. The first AR image AR1, the second AR image AR2, and the third AR image AR3 may be configured to display different indicators in different regions of the windshield 251.

One or more of the regions in which the first AR image AR1, the second AR image AR2, and the third AR image AR3 are displayed may be configured to overlap each other. Accordingly, two or more of the first AR image AR1, the second AR image AR2, and the third image AR3 may be configured to be used to display an overlapping image in a specific region of the windshield 251. The first AR image AR1 and the second AR image AR2, and the second AR image AR2 and the third AR image AR3 may be configured to be used to display an overlapping image in a specific region of the windshield 251. The first AR image AR1, the second AR image AR2, and the third AR image AR3 may be transmitted through the second mirror 1320 adjacent to the windshield 251. The first AR image AR1 and the second AR image AR2 may be configured in such a manner that the area of the respective overlapping portions of the first AR image AR1 and the second AR image AR2 is less than or equal to the area of the displayed portion of the first AR image AR1 or the second AR image AR2 The second AR image AR2 and the third AR image AR3 may be configured in such a manner that an area of respective overlapping portions of the second AR image AR2 and the third AR image AR3 is less than or equal to an area of respective displayed portions thereof.

With reference to FIGS. 7 and 18, the PGU 1100 may be configured to have a plurality of regions to display the first AR image AR1, the second AR image AR2, and the third AR image AR3. PGUs may be arranged in the plurality of regions, respectively, of the PGU 1100. The PGU 1100 may be configured to include the first PGU 1100a, the second PGU 1100b, and the third PGU 1100c. The first PGU 1100a may be arranged in the first region of the PGU 1100. The first PPU 1100a may be configured to emit the first optical signal having the first polarization (P polarization) component. The second PGU 1100b may be arranged in the second region of the PGU 1100. The second PGU 1100b may be configured to emit the second optical signal having the second polarization (S polarization) component. The third PGU 1100c may be arranged in the third region between the first region and the second region of the PGU 1100. The third PGU 1100c may be configured to emit the third optical signal having the first polarization (P polarization) component.

The PGU 1100 may be configured as a display plane. The PGU 1100 may be configured to include the first vertical structure 1101a and the second vertical structure 1101a. The first vertical structure 1101a may be formed at the first height at the first point P1a on the display plane to prevent the interference between the first optical signal emitted from the first region and the third optical signal emitted from the third region. The second vertical structure 1102a may be formed at the second height at the second point P2a on the display plane to prevent the interference between the third optical signal emitted from the third region and the second optical signal emitted from the second region.

The first vertical structure 1101a and the second vertical structure 1102a may be formed in such a manner that the first height of the first vertical structure 1101a is equal to the second height of the second vertical structure 1102a. The first point at which the first vertical structure 1101 is arranged and the second point at which the second vertical structure 1102 is arranged may be defined as points obtained by dividing one axis of the PGU 1100 into thirds, but are not limited to this definition. The definition may vary according to the application.

The vehicular image device 1000 may further include the first and second polarization plates 1103a and 1104a arranged to be spaced apart from and parallel to the display plane of the PGU 1100. The first polarization plate 1103a may be spaced at the third height from the display plane in the first region 1100a of the PGU 1100 and may be configured to convert the polarization of the first optical signal. The first polarization plate 1103a may convert the first optical signal having the second polarization into the first optical signal having the first polarization. The second polarization plate 1104a may be spaced at a fourth height from the display plane in the third region 1100c of the PGU 1100 and may be configured to convert polarization of the third optical signal. The second polarization plate 1104a may convert the third optical signal having the second polarization into the first optical signal having the first polarization.

The first polarization plate 1103a and the second vertical structure 1104a may be formed in such a manner that the third height of the first polarization plate 1103a is equal to the fourth height of the second vertical structure 1104a. The third height from the first region 1100a of the PGU 1100 to the first polarization plate 1103 is set to be equal to the fourth height from the third region 1100c to the third polarization plate 1103a.

The first polarization plate 1103 may be configured as an HWP that converts the S-polarized (or P-polarized) first optical signal into the P-polarized (or S-polarized) first optical signal, but is not limited to this configuration. The configuration may vary according to the application. The second polarization plate 1104 may be configured as an HWP that converts the S-polarized (or P-polarized) third optical signal into the P-polarized (or S-polarized) third optical signal, but is not limited to this configuration. The configuration may vary according to the application.

The first to third regions of the PGU 1100 may be configured in such a manner that the first to third optical signals emitted therefrom are selectively reflected by and transmitted through the mirrors in a manner that varies according to the polarization state.

The first to third optical signals emitted from the respective regions of the PGU 1100 may form the first to third AR images AR1 to AR3 that are displayed in different regions of the windshield 251. The first optical signal transmitted through the second portion 1310b of the first mirror 1310 and the first point P1 on the second mirror 1320 may be displayed as the first AR image AR1 in the first region of the windshield 251 of the vehicle. The second optical signal transmitted through the second point P2 on the second mirror 1320 may be displayed as the second AR image AR2 in the second region of the windshield 251. After being initially reflected by the second mirror 1320, the third optical signal transmitted through the third point P3 on the second mirror 1320 may be displayed as the third AR image AR3 in the third region of the windshield 251.

The second mirror 1320 may be arranged in such a manner that the third point P3 thereon is most adjacent to the user within the vehicle. The second mirror 1320 may be arranged in such a manner that the second point P2 thereon is positioned farthest from the user within the vehicle. The first region, the second region, and the third region of the windshield 251 may correspond to the lower portion, the central portion, and the upper portion, respectively, of the windshield 251. Accordingly, the first AR image AR1, the second AR image AR2, and the third AR image AR3 may correspond to a lower AR image, a central AR image, and an upper AR image, respectively. The structural feature of the third AR image AR3, which is the upper AR image, is that the third AR image AR3 is formed after being reflected two or more times by the first cover 1010 and the second cover 1020.

The first AR image AR1, the second AR image AR2, and the third AR image AR3 are synthesized to form a field of view (FOV) for viewing an object ahead of the vehicle. The first AR image AR1, the second AR image AR2, and the third AR image AR3 may be configured to display different indicators in different regions of the windshield 251.

One or more of the regions in which the first AR image AR1, the second AR image AR2, and the third AR image AR3 are displayed may be configured to overlap each other. Accordingly, two or more of the first AR image AR1, the second AR image AR2, and the third image AR3 may be configured to be used to display an overlapping image in a specific region of the windshield 251. The first AR image AR1 and the second AR image AR2, and the second AR image AR2 and the third AR image AR3 may be configured to be used to display an overlapping image in a specific region of the windshield 251. The first AR image AR1, the second AR image AR2, and the third AR image AR3 may be transmitted through the second mirror 1320 adjacent to the windshield 251. The first AR image AR1 and the second AR image AR2 may be configured in such a manner that the area of the respective overlapping portions of the first AR image AR1 and the second AR image AR2 is less than or equal to the area of the displayed portion of the first AR image AR1 or the second AR image AR2 The second AR image AR2 and the third AR image AR3 may be configured in such a manner that an area of respective overlapping portions of the second AR image AR2 and the third AR image AR3 is less than or equal to an area of respective displayed portions thereof.

With reference to FIGS. 14, 15, and 19, the PGU 1100 may be configured to include the first PGU 1100a, the second PGU 1100b, and the third PGU 1100c. The first PGU 1100a may be arranged in the first region of the PGU 1100. The first PPU 1100a may be configured to emit the first optical signal having the first polarization (P polarization) component. The second PGU 1100b may be arranged in the second region of the PGU 1100. The second PGU 1100b may be configured to emit the second optical signal having the second polarization (S polarization) component. The third PGU 1100c may be arranged in the third region between the first region and the second region of the PGU 1100. The third PGU 1100c may be configured to emit the third optical signal having the first polarization (P polarization) component.

The PGU 1100 may be configured as a display plane. The PGU 1100 may be configured to include the first vertical structure 1101 and the second vertical structure 1102. The first vertical structure 1101 may be formed at the first height at the first point P1b on the display plane to prevent the interference between the first optical signal emitted from the first region and the third optical signal emitted from the third region. The second vertical structure 1102 may be formed at the second height at the second point P2b on the display plane to prevent the interference between the third optical signal emitted from the third region and the second optical signal emitted from the second region.

The first vertical structure 1101 and the second vertical structure 1102 may be formed in such a manner that the first height of the first vertical structure 1101 is equal to the second height of the second vertical structure 1102. The first point at which the first vertical structure 1101 is arranged and the second point at which the second vertical structure 1102 is arranged may be defined as points obtained by dividing one axis of the PGU 1100 into thirds, but are not limited to this definition. The definition may vary according to the application.

The vehicular image device 1000 may further include the first and second polarization plates 1103 and 1104 arranged to be spaced apart from and parallel to the display plane of the PGU 1100. The first polarization plate 1103 may be spaced at the third height from the display plane in the first region 1100a of the PGU 1100 and may be configured to convert the polarization of the first optical signal. The first polarization plate 1103 may convert the first optical signal having the second polarization into the first optical signal having the first polarization. The second polarization plate 1104 may be spaced at the fourth height from the display plane in the third region 1100c of the PGU 1100 and may be configured to convert the polarization of the third optical signal. The second polarization plate 1104 may convert the third optical signal having the second polarization into the first optical signal having the first polarization.

The first polarization plate 1103 and the second polarization plate 1104 may be formed in such a manner that the first height of the first polarization plate 1103 is equal to the second height of the second polarization plate 1104. The third height from the first region 1100a of the PGU 1100 to the first polarization plate 1103 may be set to be equal to the fourth height from the third region 1100c to the third polarization plate 1103.

The first polarization plate 1103 may be configured as an HWP that converts the S-polarized (or P-polarized) first optical signal into the P-polarized (or S-polarized) first optical signal, but is not limited to this configuration. The configuration may vary according to the application. The second polarization plate 1104 may be configured as an HWP that converts the S-polarized (or P-polarized) third optical signal into the P-polarized (or S-polarized) third optical signal, but is not limited to this configuration. The configuration may vary according to the application.

The first to third regions of the PGU 1100 may be configured in such a manner that the first to third optical signals emitted therefrom are selectively reflected by and transmitted through the mirrors in a manner that varies according to the polarization state.

The first optical signal having the first polarization component, emitted from the first region 1100a of the PGU 1100, may be transmitted through the fourth mirror 1340, reflected by the third mirror 1330, and transmitted through the fourth mirror 1340. The first optical signal having the first polarization component, emitted from the first region 1100a of the PGU 1100, may be reflected by the first portion1310a of the first mirror 1310 and transmitted through the second portion 1310b of the first mirror 1310 and the second mirror 1320.

The third optical signal having the first polarization component, emitted from the third region 1100c to the PGU 1100, may be transmitted through the fourth mirror 1340, reflected by the third mirror 1330, and transmitted through the fourth mirror 1340. The third optical signal having the first polarization component, emitted from the third region 1100c of the PGU 1100, may be reflected by the first portion1310a of the first mirror 1310 and transmitted through the second portion 1310b of the first mirror 1310 and the second mirror 1320.

The second optical signal, having the second polarization component, emitted from the second region 1100b of the PGU 1100, may be reflected by the third mirror 1330 and the first portion1310a of the first mirror 1310 and transmitted through the second portion 1310b of the first mirror 1310. The second optical signal having the second polarization component, emitted from the second region 100b of the PGU 1100, may be reflected by the second portion 1310b of the first mirror 1310, and transmitted through the second mirror 1320.

The first to third optical signals emitted from the respective regions of the PGU 1100 may form the first to third AR images AR1 to AR3 that are displayed in different regions of the windshield 251. The first optical signal transmitted through the first point P1 on the second mirror 1320 may be displayed as the first AR image AR1 in the first region of the windshield 251 of the vehicle. The second optical signal transmitted through the second portion 1310b of the first mirror 1310 and the second point P2 on the second mirror 1320 may be displayed as the second AR image AR2 in the second region of the windshield 251. The third optical signal transmitted through the third point P3 on the second mirror 1320 may be displayed as the third AR image AR3 in the third region of the windshield 251.

The second mirror 1320 may be arranged in such a manner that the third point P3 thereon is most adjacent to the user within the vehicle. The second mirror 1320 may be arranged in such a manner that the second point P2 thereon is positioned farthest from the user within the vehicle. The first region, the second region, and the third region of the windshield 251 may correspond to the lower portion, the central portion, and the upper portion, respectively, of the windshield 251. Accordingly, the first AR image AR1, the second AR image AR2, and the third AR image AR3 may correspond to a lower AR image, a central AR image, and an upper AR image, respectively.

The vehicular image device, according to the present disclosure, having a reduced volume, and the vehicle equipped with the vehicular image device have been described above. Technical features of the vehicular image device, according to the present disclosure, having a reduced volume, and technical features of the vehicle equipped with the vehicular image device are summarized as follows. The vehicular image device and the vehicle are not limited to these techniques.

According to the present disclosure, the vehicular image device includes a plurality of covers configured to reflect or transmit optical signals. As a result, the vehicular image device can have a reduced volume within a limited mounting space of a large-screen AR-HUD, thereby ensuring a field of view (FOV) having a predetermined angle or greater.

According to the present disclosure, a polarization film is attached to at least one surface of the cover. As a result, the vehicular image device can have a reduced volume within a limited mounting space of a large-screen AR-HUD, thereby ensuring a field of view (FOV) having a predetermined angle or greater.

According to the present specification, different AR images are reflected through different regions of a windshield using a plurality of mirrors. As a result, the vehicular image device can provide the AR images within a field of view (FOV) of a user.

According to the present disclosure, the vehicular image device can have an arrangement structure that varies according to vehicle specifications, thereby optimizing occupied space in terms of length or volume.

According to the present disclosure, when a length constraint is limited, the vehicular image device can have a height-reduced structure by directly propagating optical signals from a PGU toward a windshield through a mirror arranged on one lateral surface of a dashboard and through mirrors arranged on covers.

According to the present disclosure, when a length constraint is significant, the vehicular image device can have a length-reduced structure by reflecting optical signals from a PGU through mirrors arranged on one lateral surface and propagating the optical signals toward a windshield through mirrors arranged on the other lateral surface and covers.

According to the present disclosure, in the vehicular image device, a plurality of covers arranged on a front surface of a dashboard and within the dashboard to prevent the introduction of foreign material are used to establish an optical system for multiple selective reflection/transmission, thereby enabling maximized volume reduction.

According to the present disclosure, the vehicular image device can achieve a volume reduction of 40% or more compared to a large-screen AR-HUD available on the market.

According to the present disclosure, the vehicular image device can be configured as an AR-HUD having a volume of approximately 9 L when installed in a vehicle.

The present disclosure is not limited to the effects mentioned above. From the above detailed description, other effects not mentioned will be clearly understood by a person of ordinary skill in the art to which the present disclosure pertains.

The present disclosure can be embodied in the form of computer-readable code on a computer-readable medium on which a program is recorded. The computer-readable media include all types of recording media capable of storing data readable by a computer system. Examples of the computer-readable medium include a hard disk drive (HDD), a solid-state disk (SSD), a silicon disk drive (SDD), a ROM, a RAM, a CD-ROM, a magnetic tape, a floppy disk, an optical data storage device, and the like. In addition, the computer may also include a process or a controller. Therefore, the detailed description should not be construed as limiting in any respect, but should be regarded as illustrative in nature. The scope of the present disclosure should be determined by the proper interpretation of the following claims. All equivalent modifications of the embodiments of the present disclosure fall within the scope of the present disclosure.

## Claims

1. A vehicular image device comprising:
a first cover formed on a front surface of a dashboard of a vehicle;
a second cover arranged more inward than the front surface in a manner spaced apart from the first cover;
a picture generation unit (PGU) arranged inside the dashboard and forming a first optical signal and a second optical signal toward one lateral surface of the dashboard;
a first mirror arranged on the one lateral surface of the dashboard and the second cover and configured to reflect the first optical signal and the second optical signal from the one lateral surface; and
a second mirror configured to transmit the first optical signal transmitted through the first mirror arranged on the second cover and the second optical signal reflected by the first mirror arranged on the second cover.

2. The vehicular image device of claim 1, further comprising:
a third mirror configured to have a first length in such a manner as to reflect the first optical signal having first polarization, the first optical signal being emitted from a first region of the PGU; and
a fourth mirror overlapping the third mirror and configured to have a second length different from the first length in such a manner as to reflect the second optical signal having a second polarization component, the second optical signal being emitted from a second region of the PGU.

3. The vehicular image device of claim 2, wherein the third mirror is formed to have the first length less than the second length of the fourth mirror, and
wherein the third mirror is arranged at a higher position than the fourth mirror along a vertical axis.

4. The vehicular image device of claim 3, wherein the first optical signal having the first polarization, the first optical signal being emitted from the first region, is reflected by the third mirror, transmitted through the fourth mirror, and reflected by the first mirror, and
wherein the second optical signal having the second polarization, the second optical signal being emitted from the second region, is reflected by the first mirror after being reflected by the fourth mirror.

5. The vehicular image device of claim 2, wherein the PGU is configured as a display plane, the vehicular image device further comprising:
a vertical structure formed at a first height on the display plane in such a manner as to prevent interference between the first optical signal emitted from the first region and the second optical signal emitted from the second region.

6. The vehicular image device of claim 5, further comprising:
a polarization plate spaced at a second height from the display plane in the first region and configured to introduce a phase delay of λ/2 to the first optical signal having the second polarization, and
wherein the polarization plate converts the first optical signal having the second polarization into the first optical signal having the first polarization.

7. The vehicular image device of claim 1, wherein the first mirror comprises:
a first portion arranged on the one lateral surface; and
a second portion connected to the first portion and arranged on the second cover,
wherein the second portion transmits the first optical signal reflected by the first portion, transmits the second optical signal reflected by the first portion, and reflects the second optical signal reflected by the second mirror.

8. The vehicular image device of claim 7, wherein the first optical signal transmitted through a first point on the second mirror is displayed as a first AR image in a first region of a windshield of the vehicle,
wherein, after being initially reflected by the second portion of the first mirror and the second mirror, the second optical signal transmitted through a second point on the second mirror is displayed as a second AR image in a second region of the windshield of the vehicle,
wherein the second mirror is arranged in such a manner that the second point thereon is positioned more inward in a manner adjacent to a user, than the first point, and
wherein the first region and the second region of the windshield correspond to a lower portion and an upper portion, respectively, of the windshield.

9. The vehicular image device of claim 1, wherein the second cover comprises:
a first mirror; and
a polarization plate arranged on a rear surface of the first mirror and configured to convert polarization of the first optical signal and polarization of the second optical signal.

10. The vehicular image device of claim 9, wherein the first cover comprises:
the second mirror;
a polarization plate arranged on a first surface of the second mirror and configured to convert the polarization of the first optical signal and the polarization of the second optical signal, and
a polarization film unit arranged on a second surface of the second mirror and configured to convert respective second polarization components of the first optical signal and the second optical signal.

11. The vehicular image device of claim 1, wherein the PGU comprises:
a first PGU arranged in a first region of the PGU and configured to emit the first optical signal having a first polarization component;
a second PGU arranged in a second region of the PGU and configured to emit the second optical signal having a second polarization component; and
a third PGU arranged in a third region adjacent to the second region of the PGU and configured to emit a third optical signal having the second polarization component.

12. The vehicular image device of claim 1, wherein the PGU comprises:
a first PGU arranged in a first region of the PGU and configured to emit the first optical signal having a first polarization component;
a second PGU arranged in a second region of the PGU and configured to emit the second optical signal having a second polarization component; and
a third PGU arranged in a third region between the first region and the second region of the PGU and configured to emit a third optical signal having the first polarization component.

13. The vehicular image device of claim 11, wherein the PGU is configured as a display plane, the vehicular image device further comprising:
a first vertical structure formed at a first height at a first point on the display plane in such a manner as to prevent interference between the first optical signal emitted from the first region and the second optical signal emitted from the second region; and
a second vertical structure formed at a second height at a second point on the display plane in such a manner as to prevent interference between the second optical signal emitted from the second region and the third optical signal emitted from the third region.

14. The vehicular image device of claim 13, further comprising:
a polarization plate spaced at a third height from the display plane in the first region and configured to introduce a phase delay of λ/2 to the first optical signal,
wherein the polarization plate converts the first optical signal having the second polarization into the first optical signal having the first polarization.

15. The vehicular image device of claim 10, wherein the first optical signal having the first polarization component, the first optical signal being emitted from the first region, is transmitted through the fourth mirror, reflected by the third mirror, transmitted through the fourth mirror, reflected by a first portion of the first mirror, and transmitted through a second portion of the first mirror and the second mirror,
wherein the second optical signal having the second polarization component, the second optical signal being emitted from the second region, is reflected by the fourth mirror and the first portion of the first mirror, transmitted through the second portion of the first mirror, reflected by the second mirror and the second portion of the first mirror, and transmitted through the second mirror, and
wherein the third optical signal having the second polarization component, the third optical signal being emitted from the third region, is reflected by the fourth mirror and the first portion of the first mirror, transmitted through the second portion of the first mirror, reflected by the second mirror and the second portion of the first mirror, and transmitted through the second mirror.

16. The vehicular image device of claim 15, wherein the first optical signal transmitted through the second portion of the first mirror and a first point on the second mirror is displayed as a first AR image in a first region of a windshield of the vehicle,
wherein, after being initially reflected by the second mirror, the second optical signal transmitted through a second point on the second mirror is displayed as a second AR image in a second region of the windshield,
wherein, after being initially reflected by the second mirror, the third optical signal transmitted through a third point on the second mirror is displayed as a third AR image in a third region of the windshield,
wherein the second mirror is arranged in such a manner that the third point thereon is most adjacent to a user within the vehicle, and
wherein the first region, the second region, and the third region of the windshield correspond to a lower portion, a central portion, and an upper portion, respectively, of the windshield.

17. The vehicular image device of claim 10, wherein the PGU is configured as a display plane, the vehicular image device further comprising:
a first vertical structure formed at a first height at a first point on the display plane in such a manner as to prevent intervention between the first optical signal emitted from the first region and the third optical signal emitted from the third region; and
a second vertical structure formed at a second height at a second point on the display plane in such a manner as to prevent intervention between the third optical signal emitted from the third region and the second optical signal emitted from the second region.

18. The vehicular image device of claim 17, further comprising:
a first polarization plate spaced at a third height from the display plane in the first region and configured to introduce a phase delay of λ/2 to polarization of the first optical signal; and
a second polarization plate spaced at a fourth height from the display plane in the third region and configured to introduce a phase delay of λ/2 to polarization of the third optical signal,
wherein the first polarization plate converts the first optical signal having the second polarization into the first optical signal having the first polarization, and
wherein the second polarization plate converts the third optical signal having the second polarization into the third optical signal having the first polarization.

19. The vehicular image device of claim 12, wherein the first optical signal having the first polarization component, the first optical signal being emitted from the first region, is transmitted through the fourth mirror, reflected by the third mirror, transmitted through the fourth mirror, reflected by a first portion of the first mirror, and transmitted through a second portion of the first mirror and the second mirror,
wherein the third optical signal having the first polarization component, the third optical signal being emitted from the third region, is transmitted through the fourth mirror, reflected by the third mirror, transmitted through the fourth mirror, reflected by a first portion of the first mirror, and transmitted through a second portion of the first mirror and the second mirror, and
wherein the second optical signal having the second polarization component, the second optical signal being emitted from the second region, is reflected by the third mirror and the first portion of the first mirror, transmitted through the second portion of the first mirror, reflected by the second mirror and the second portion of the first mirror, and transmitted through the second mirror.

20. The vehicular image device of claim 19, wherein the first optical signal transmitted through a first point on the second mirror is displayed as a first AR image in a first region of a windshield of the vehicle,
wherein the third optical signal transmitted through the second portion of the first mirror and a second point on the second mirror is displayed as a second AR image in a second region of the windshield,
wherein the second optical signal transmitted through a third point on the second mirror is displayed as a third AR image in a third region of the windshield,
wherein the second mirror is arranged in such a manner that the third point thereon is most adjacent to a user within the vehicle, and
wherein the first region, the second region, and the third region of the windshield correspond to a lower portion, a central portion, and an upper portion, respectively, of the windshield.
